# EUROPÄISCHE PATENTSCHRIFT

(11) **EP 4 197 829 B1**
(45) Veröffentlichungstag und Bekanntmachung des Hinweises auf die Patenterteilung: **06.05.2026**
(21) Anmeldenummer: 22209509.3
(22) Anmeldetag: 25.11.2022
(51) Int. Cl.: B60G 17/052

(54) **ANHÄNGEFAHRZEUG MIT ELEKTROMAGNETISCHER VENTILANORDNUNG UND VERFAHREN ZUR STEUERUNG DER ELEKTROMAGNETISCHEN VENTILANORDNUNG DES ANHÄNGEFAHRZEUGS**
TRAILER WITH ELECTROMAGNETIC VALVE ARRANGEMENT AND METHOD FOR CONTROLLING THE ELECTROMAGNETIC VALVE ARRANGEMENT OF THE TRAILER
REMORQUE AVEC DISPOSITIF DE SOUPAPE ÉLECTROMAGNÉTIQUE ET PROCÉDÉ DE COMMANDE DU DISPOSITIF DE SOUPAPE ÉLECTROMAGNÉTIQUE DE LA REMORQUE

(30) Priorität: 16.12.2021 DE 102021133412
(43) Veröffentlichungstag der Anmeldung: 21.06.2023
(73) Patentinhaber: ZF CV Systems Europe BV, 1170 Brüssel (BE)
(72) Erfinder: DIET, Felix, 31552 Rodenberg (DE); GERLACH, Steffen, 30169 Hannover (DE)
(74) Vertreter: Ohlendorf, Henrike

(56) Entgegenhaltungen:
- EP-B1- 1 212 205
- CN-U- 206 374 491
- DE-A1- 102011 051 505
- DE-A1- 102019 105 791
- DE-A1- 19 905 113
- DE-A1- 3 628 681
- DE-A1- 4 222 922
- JP-B2- 5 318 794
- US-A1- 2004 164 511

## Beschreibung

Die Erfindung betrifft ein mehrachsiges Anhängefahrzeug mit einer von einem elektronischen Steuergerät steuerbaren elektromagnetischen Ventilanordnung zur Steuerung einer Schleppachse, wobei die Schleppachse an dem Anhängefahrzeug in Vorwärtsfahrtrichtung gesehen vor oder hinter einer Hauptachse angeordnet ist, über zumindest einen Tragbalg an einem Fahrzeugrahmen des Anhängefahrzeugs abgestützt angeordnet ist und mittels mindestens eines Liftbalgs anhebbar oder absenkbar ist und wobei die Ventilanordnung derart ausgebildet ist, dass ein Balgdruck in den Tragbälgen sowie ein Balgdruck in dem Liftbalg unabhängig voneinander einstellbar sind und dass die Schleppachse bei abgeschalteter Stromversorgung automatisch zur Fahrbahn abgesenkt wird. Die Erfindung betrifft auch ein Verfahren zur Steuerung einer solchen Ventilanordnung.

Eine Schleppachse eines Fahrzeugs kann bei einem Motorfahrzeug vor oder hinter dessen Antriebsachse angeordnet sein. Bei einem Anhängefahrzeug kann eine solche Schleppachse in Vorwärtsfahrtrichtung gesehen vor oder hinter einer nicht angetriebenen Hauptachse angeordnet sein.

Wenn eine solche Schleppachse luftgefedert angeordnet ist, also über zumindest einen Tragbalg an dem Fahrzeugrahmen des betreffenden Fahrzeugs abgestützt ist, kann die an der Schleppachse wirkende Achslast durch eine Entlüftung ihrer Tragbälge reduziert und durch eine Belüftung dieser Tragbälge erhöht werden. In einem beladenen Zustand des Fahrzeugs ist ein Balgdruck in Tragbälgen einer Schleppachse normalerweise auf einen Balgdruck in Tragbälgen einer Antriebsachse beziehungsweise Hauptachse eingestellt, sodass eine Belastung durch eine Beladung und ein Eigengewicht des Fahrzeugs gleichmäßig auf alle Fahrzeugachsen verteilt ist.

In einem unbeladenen Zustand des Fahrzeugs wird der Balgdruck in den Tragbälgen der Schleppachse dagegen vorteilhaft abgesenkt, um einen Reifenverschleiß insbesondere an den Rädern der Schleppachse zu reduzieren und um beim Rangieren einen kleineren Kurvenradius befahren zu können. Auch beim Anfahren unter schwierigen Traktionsbedingungen kann der Balgdruck der Schleppachse eines Motorfahrzeugs abgesenkt werden, um die Achslast an der Antriebsachse zu erhöhen und damit deren Traktion zu verbessern. Bei einem als Sattelauflieger oder Zentralachsanhänger ausgebildeten Anhängefahrzeug kann der Balgdruck in den Tragbälgen der Schleppachse des Anhängefahrzeugs zu demselben Zweck abhängig von einer Anordnung der Tragbälge der Schleppachse reduziert oder erhöht werden, um über eine erhöhte Stützlast an der Sattel- oder Anhängekupplung die Achslast der Antriebsachse des Zugfahrzeugs zu erhöhen.

Aus der DE 43 17 847 B4 ist eine Ventilanordnung zur Steuerung von Balgdrücken in Tragbälgen einer luftgefederten Antriebsachse und einer luftgefederten Schleppachse eines Motorfahrzeugs bekannt. Die Ventilanordnung weist eine erste Ventileinrichtung mit zwei Magnetventilen zur Einstellung des Balgdruckes in den Tragbälgen der Antriebsachse und eine zweite Ventileinrichtung mit einem Magnetventil zur Einstellung des Balgdruckes in den Tragbälgen der Schleppachse auf.

Das erste Magnetventil der ersten Ventileinrichtung ist als ein 3/2-Wege-Magnetschaltventil ausgebildet, über welches ein Ausgangsanschluss in einem unbestromten Zustand des 3/2-Wege-Magnetschaltventils mit einer Entlüftungsleitung und in einem bestromten Zustand des 3/2-Wege-Magnetschaltventils mit einer Vorratsleitung verbunden ist. Das zweite Magnetventil der ersten Ventileinrichtung ist als ein 2/2-Wege-Magnetschaltventil ausgebildet, über welches ein mit den Tragbälgen der Antriebsachse verbundener Arbeitsausgang in einem unbestromten Zustand des 2/2-Wege-Magnetschaltventils gegenüber einem mit dem Ausgangsanschluss des ersten Magnetventils verbundenen Eingangsanschluss abgesperrt sowie in einem bestromten Zustand des 2/2-Wege-Magnetschaltventils mit diesem Eingangsanschluss verbunden ist. Mittels dieser ersten Ventileinrichtung kann der Balgdruck in den Tragbälgen der Antriebsachse stufenlos zwischen einem Umgebungsdruck und einem in der Vorratsleitung anliegenden Vorratsdruck eingestellt werden. Ein Öffnen des zweiten Magnetventils bewirkt bei unbestromtem erstem Magnetventil eine Absenkung des Balgdruckes und bei bestromtem ersten Magnetventil eine Erhöhung des Balgdruckes in den Tragbälgen der Antriebsachse.

Das Magnetventil der zweiten Ventileinrichtung dieser Ventilanordnung ist als ein teilweise druckgesteuertes 3/3-Wege-Magnetschaltventil ausgebildet, das einen an den Arbeitsausgang des zweiten Magnetventils der ersten Ventileinrichtung angeschlossenen Eingangsanschluss, einen an die Entlüftungsleitung angeschlossenen Entlüftungsausgang, einen an die Tragbälge der Schleppachse angeschlossenen Arbeitsausgang sowie einen über eine pneumatische Steuerleitung an den Ausgangsanschluss des ersten Magnetventils der ersten Ventileinrichtung angeschlossenen Steuereingang aufweist. Mittels dieser zweiten Ventileinrichtung kann der Balgdruck in den Tragbälgen der Schleppachse stufenlos zwischen dem Umgebungsdruck und dem in den Tragbälgen der Antriebsachse anliegenden Balgdruck eingestellt oder eingeschlossen werden. In einem unbestromten Zustand des 3/3-Wege-Magnetschaltventils ist der Arbeitsausgang mit dem Arbeitsausgang des zweiten Magnetventils verbunden, sodass in den Tragbälgen der Schleppachse der Balgdruck der Tragbälge der Antriebsachse anliegt. In einem bestromten Zustand des 3/3-Wege-Magnetschaltventils ist der Arbeitsausgang bei drucklosem Steuereingang mit dem Entlüftungsausgang verbunden, sodass der Balgdruck in den Tragbälgen der Schleppachse dann abgesenkt wird. Im bestromten Zustand des 3/3-Wege-Magnetschaltventils ist der Arbeitsausgang bei druckführendem Steuereingang gegen den Eingangsanschluss und den Entlüftungsausgang abgesperrt, sodass der Balgdruck in den Tragbälgen der Schleppachse dann eingeschlossen ist.

Eine Liftachse ist in einem Motorfahrzeug einer Antriebsachse oder in einem Anhängefahrzeug einer nicht angetriebenen Hauptachse in Vorwärtsfahrtrichtung gesehen vorgeordnet oder nachgeordnet. Wenn die Liftachse luftgefedert angeordnet ist, also über zumindest einen Tragbalg an dem Fahrzeugrahmen des betreffenden Fahrzeugs abgestützt ist, sowie mittels mindestens eines Liftbalgs anhebbar und absenkbar ist, erfolgt das Anheben der Liftachse durch eine Belüftung des Liftbalgs und eine gleichzeitige Entlüftung der zugeordneten Tragbälge. Umgekehrt erfolgt das Absenken der Liftachse durch eine Belüftung der Tragbälge und eine gleichzeitige Entlüftung des Liftbalgs. In einem beladenen Zustand des Fahrzeugs ist die Liftachse normalerweise abgesenkt, sodass eine Belastung durch eine Beladung und ein Eigengewicht des Fahrzeugs gleichmäßig auf alle Fahrzeugachsen verteilt ist.

In einem unbeladenen oder teilbeladenen Zustand des Fahrzeugs wird die Liftachse dagegen vorteilhaft angehoben, um einen Reifenverschleiß, insbesondere an den Rädern der Liftachse, zu reduzieren, und um beim Rangieren einen kleineren Kurvenradius befahren zu können. Auch zum Anfahren unter schwierigen Traktionsbedingungen kann die Liftachse eines Motorfahrzeugs angehoben werden, um die Achslast der Antriebsachse zu erhöhen und damit deren Traktion zu verbessern. Bei einem als Sattelauflieger oder Zentralachsanhänger ausgebildeten Anhängefahrzeug kann eine Liftachse des Anhängefahrzeugs zu demselben Zweck angehoben werden, um über eine erhöhte Stützlast an der Sattelkupplung oder Anhängekupplung die Achslast der Antriebsachse des Zugfahrzeugs zu erhöhen.

In der DE 10 2019 124 651 A1 ist eine Ventilanordnung zur Steuerung von Balgdrücken in Tragbälgen und in mindestens einem Liftbalg einer luftgefederten Liftachse eines Anhängefahrzeugs beschrieben. Die Ventilanordnung umfasst ein als ein druckgesteuertes 5/2-Wege-Schaltventil ausgebildetes Hauptsteuerventil und ein diesem vorgeschaltetes, als ein 3/2-Wege-Magnetschaltventil ausgebildetes Vorsteuerventil. In einem unbestromten Zustand ist ein Steuereingang des Hauptsteuerventils über das Vorsteuerventil mit einem Entlüftungsausgang verbunden und somit drucklos. In einem bestromten Zustand ist der Steuereingang des Hauptsteuerventils über das Vorsteuerventil mit einer Vorratsleitung verbunden und steht somit unter einem Schaltdruck.

Bei drucklosem Steuereingang sind die Tragbälge der Liftachse über das Hauptsteuerventil mit Tragbälgen einer benachbarten Hauptachse verbunden und der Liftbalg steht mit einem Entlüftungsausgang in Verbindung, sodass die Liftachse dann abgesenkt und belastbar ist. Bei druckführendem Steuereingang, also in einem umgeschalteten Zustand des Hauptsteuerventils, sind die Tragbälge der Liftachse über das Hauptsteuerventil mit einem Entlüftungsausgang verbunden und somit drucklos, während der Liftbalg dann mit der Vorratsleitung verbunden ist, wodurch die Liftachse angehoben und nicht belastbar ist.

Aus der EP 1 212 205 B1 ist eine Steueranlage zum Heben und Senken eines Fahrzeugaufbaus von luftgefederten Fahrzeugen bekannt, die auf Anhängern anwendbar ist. Das Fahrzeug weist eine Liftachse mit Luftfederbälgen und einem Hebebalg auf. Zur Versorgung der Luftfederbälge und des Hebebalgs ist ein Achsliftventil vorgesehen, das als 5/2-Wege-Ventil ausgebildet und über eine Steuereinrichtung elektrisch ansteuerbar ist. In einer ersten, stromlosen Schaltstellung des Achsliftventils ist der Hebebalg entlüftet und somit die Liftachse abgesenkt. Ein Druck in den Luftfederbälgen kann über eine Schaltventilanordnung mit zwei Schaltventilen eingestellt werden. In einer zweiten, bestromten Schaltstellung ist der Hebebalg mit einem Vorratsdruck belüftet und somit die Liftachse abgesenkt. In dieser Schaltstellung des Achsliftventils sind die Luftfederbälge entlüftet.

JP 5 318 794 B2 offenbart eine Liftachssteuerung für ein Fahrzeug, die es ermöglicht, eine Liftachse anzuheben, wenn das Fahrzeug auf einer Waage steht, um einen Radstand des Fahrzeugs so weit zu verkürzen, dass alle Achsen des Fahrzeugs auf der Waage stehen können, während die Liftachse, wäre sie abgesenkt, abseits der Waage aufstehen würde. JP 5 318 794 B2 offenbart dazu Luftfedern für die Tragachse, die über ein erstes elektromagnetisches Ventil entweder mit Vorratsdruck beaufschlagt oder entlüftet werden können. Weiterhin ist mit jeder Luftfeder der Liftachse auch ein pneumatisch betriebener Aktuator angeordnet, wobei die Aktuatoren über ein zweites elektromagnetisches Ventil entweder mit Vorratsdruck beaufschlagt oder entlüftet werden können. Die elektromagnetischen Ventile werden in einem Schaltkreis über ein Relaisventil von einem Schalter gemeinsam angesteuert. Der Schalter wird von einem Fahrer des Fahrzeugs manuell bedient. Ist der Schalter geschlossen, werden über das zweite elektromagnetische Ventil die Aktuatoren mit dem Vorratsdruck beaufschlagt und die Luftfedern der Liftachse entlüftet. Ist der Schalter geöffnet, werden über das erste elektromagnetische Ventil die Aktuatoren entlüftet und die Luftfedern der Liftachse mit dem Vorratsdruck beaufschlagt.

US 2004/0164511 A1 offenbart ein Fahrzeug mit einer anhebbaren Liftachse. CN 206374491 U offenbart eine Luftfederungsanordnung für ein Fahrzeug mit einem Schaltventil, mittels dessen umgeschaltet werden kann zwischen einem Zustand, in dem ein Luftfederbalg einer Antriebsachse und ein Luftfederbalg einer Liftachse verbunden sind, und einem Zustand, in dem der Luftfederbalg der Antriebsachse und der Luftfederbalg der Liftachse gegeneinander abgesperrt sind.

Eine anhebbare, luftgefederte Schleppachse stellt eine Kombination aus einer Schleppachse und einer Liftachse dar, bei der in einem abgesenkten Zustand in einer Schleppachsfunktion der Balgdruck in den Tragbälgen reduziert oder erhöht werden kann. Bei einer Liftachsfunktion der Schleppachse kann diese durch eine Belüftung des Liftbalgs und eine gleichzeitige Entlüftung der zugeordneten Tragbälge angehoben werden. Bei einer Belüftung der Tragbälge und einer gleichzeitigen Entlüftung des Liftbalgs kann die Schleppachse abgesenkt werden.

Eine Ventilanordnung zur Steuerung einer derartigen Schleppachse sollte derart ausgebildet sein, dass der Balgdruck in den zugeordneten Tragbälgen sowie der Balgdruck in dem Liftbalg unabhängig voneinander einstellbar sind und dass die Schleppachse bei abgeschaltetem Bordnetz, also bei unbestromten Magnetventilen, automatisch abgesenkt wird. Durch eine automatische Absenkung der Schleppachse wird eine Überlastung der anderen Fahrzeugachsen des Anhängefahrzeugs verhindert, zum Beispiel dann, wenn das Anhängefahrzeug von einem Zugfahrzeug abgekoppelt ist oder auch nur ein ISO7638-Stecker des Anhängefahrzeugs von einer zugeordneten Steckerbuchse des Zugfahrzeugs abgezogen ist.

Angesichts der bekannten, relativ aufwendigen Ventilanordnungen zur Steuerung einer Schleppachse und einer Liftachse liegt der Erfindung die Aufgabe zugrunde, eine möglichst einfach aufgebaute und kostengünstig realisierbare Ventilanordnung zur Steuerung einer anhebbaren Schleppachse der eingangs genannten Bauart vorzustellen. Außerdem soll ein Verfahren beschrieben werden, welches bestimmt, wie diese Ventilanordnung angesteuert werden muss, um die Schleppachse in einem Schleppachsbetrieb oder einem Liftachsbetrieb betreiben zu können.

Die vorrichtungsbezogene Aufgabe ist durch ein Anhängefahrzeug mit einer Ventilanordnung mit den Merkmalen des Anspruchs 1 bzw. mit den Merkmalen des Anspruchs **4** gelöst. Unabhängige Verfahrensansprüche geben Verfahrensschritte zur Ventilbetätigung der Ventilanordnung an, mittels denen ein Schleppachsbetrieb oder ein Liftachsbetrieb der Schleppachse einstellbar ist. Vorteilhafte Weiterbildungen sind in den jeweils zugeordneten abhängigen Ansprüchen definiert.

Demnach betrifft die Erfindung zunächst ein mehrachsiges Anhängefahrzeug mit einer von einem elektronischen Steuergerät steuerbaren elektromagnetischen Ventilanordnung zur Steuerung einer Schleppachse, wobei die Schleppachse an dem Anhängefahrzeug in Vorwärtsfahrtrichtung gesehen vor oder hinter einer Hauptachse angeordnet ist, wobei die Schleppachse über zumindest einen Tragbalg an einem Fahrzeugrahmen des Anhängefahrzeugs abgestützt angeordnet ist und wobei die Schleppachse mittels mindestens eines Liftbalgs anhebbar oder absenkbar ist. Die Ventilanordnung ist derart ausgebildet, dass ein Balgdruck in den Tragbälgen sowie ein Balgdruck in dem Liftbalg unabhängig voneinander einstellbar sind und dass die Schleppachse bei abgeschalteter Stromversorgung automatisch zu einer Fahrbahn abgesenkt wird. Die Fahrbahn ist eine Fahrbahn, auf der das Fahrzeug aufsteht, wobei hier mit Aufstehen auch ein Fahren bezeichnet sein soll.

Zur Lösung der vorrichtungsbezogenen Aufgabe ist vorgesehen, dass die Ventilanordnung eine von dem elektronischen Steuergerät ansteuerbare erste Magnetventileinheit zur stufenlosen Einstellung des Balgdruckes in den Tragbälgen der Schleppachse zwischen einem Umgebungsdruck und einem in den Tragbälgen der Hauptachse anliegenden Balgdruck aufweist und dass die Ventilanordnung eine unabhängig von der ersten Magnetventileinheit von dem elektronischen Steuergerät ansteuerbare zweite Magnetventileinheit aufweist, welche zur Umschaltung des Balgdruckes in dem Liftbalg der Schleppachse zwischen dem Umgebungsdruck und einem Vorratsdruck dient.

Die Erfindung betrifft also ein mehrachsiges Anhängefahrzeug mit einer Ventilanordnung zur Steuerung einer Schleppachse, welche an dem Anhängefahrzeug vor oder hinter einer Hauptachse angeordnet sowie über zumindest einen Tragbalg an einem Fahrzeugrahmen des Anhängefahrzeugs abgestützt angeordnet ist und mittels mindestens eines Liftbalgs anhebbar oder absenkbar ist. Das Anhängefahrzeug kann optional auch eine Zusatzachse aufweisen, welche beispielsweise vor der Hauptachse angeordnet ist. Die
erfindungsgemäße Ventilanordnung ist derart ausgebildet, dass der Balgdruck in den Tragbälgen sowie der Balgdruck in dem Liftbalg unabhängig voneinander einstellbar sind und dass die Schleppachse bei abgeschalteter Stromversorgung automatisch abgesenkt wird.

Die separate Einstellung der Balgdrücke in den Tragbälgen und in dem Liftbalg der Schleppachse ist durch die Zuordnung jeweils einer Magnetventileinheit gegeben, wobei die Magnetventileinheiten unabhängig voneinander von dem elektronischen Steuergerät elektrisch ansteuerbar sind. Die automatische Absenkung der Schleppachse bei abgeschalteter Stromversorgung ergibt sich aus der konkreten Ausführung der beiden Magnetventileinheiten.

Gemäß einer ersten Ausführungsform der Ventilanordnung ist vorgesehen, dass die erste Magnetventileinheit als ein 3/3-Wege-Magnetschaltventil mit einem Druckeingang, einem Arbeitsausgang und einem Entlüftungsausgang ausgebildet ist, wobei der Druckeingang mit den Tragbälgen der Hauptachse, der Arbeitsausgang mit den Tragbälgen der Schleppachse und der Entlüftungsausgang mit einer Entlüftungsleitung verbunden ist.

Die Tragbälge der Schleppachse können somit wahlweise durch eine pneumatische Verbindung mit den Tragbälgen der Hauptachse belüftet oder durch eine Verbindung mit der Entlüftungsleitung entlüftet werden. Zudem kann der Balgdruck in den Tragbälgen der Schleppachse durch eine pneumatische Absperrung gegenüber den Tragbälgen der Hauptachse und gegenüber der Entlüftungsleitung konstant gehalten werden.

Um die vorgesehene Absenkung der Schleppachse bei abgeschalteter Stromversorgung zu erreichen, kann das 3/3-Wege-Magnetschaltventil derart ausgebildet sein, dass dessen Arbeitsausgang in einem unbestromten Zustand mit dem Druckeingang verbunden und gegenüber dem Entlüftungsausgang abgesperrt ist, dass der Arbeitsausgang in einem schwach bestromten Zustand gegenüber dem Druckeingang und dem Entlüftungsausgang abgesperrt ist und dass der Arbeitsausgang in einem maximal bestromten Zustand mit dem Entlüftungsausgang verbunden sowie gegenüber dem Druckeingang abgesperrt ist.

Alternativ dazu kann vorgesehen sein, dass das 3/3-Wege-Magnetschaltventil zwei von dem Steuergerät ansteuerbare Elektromagneten aufweist, welche derart angeordnet sind, dass bei einer Bestromung des ersten Elektromagneten das 3/3-Wege-Magnetschaltventil in seine Entlüftungsstellung geschaltet ist, bei welcher der Druckeingang abgesperrt und der Arbeitsausgang mit dem Entlüftungsausgang verbunden ist, dass bei einer Bestromung des zweiten Elektromagneten das 3/3-Wege-Magnetschaltventil in seine Absperrstellung geschaltet ist und dass bei nicht bestromten Elektromagneten der Druckeingang sowie der Arbeitsausgang des 3/3-Wege-Magnetschaltventils miteinander verbunden sind sowie der Entlüftungsausgang geschlossen ist.

Gemäß einer zweiten Ausführungsform der Ventilanordnung ist vorgesehen, dass die erste Magnetventileinheit ein als 2/2-Wege-Magnetschaltventil ausgebildetes Einlassventil mit einem Druckeingang und einem Arbeitsausgang sowie ein als ein 2/2-Wege-Magnetschaltventil ausgebildetes Auslassventil mit einem Arbeitseingang und einem Entlüftungsausgang umfasst, wobei der Druckeingang des Einlassventils mit den Tragbälgen der Hauptachse verbunden ist, wobei der Arbeitsausgang des Einlassventils und der Arbeitseingang des Auslassventils mit den Tragbälgen der Schleppachse verbunden sind und wobei der Entlüftungsausgang des Auslassventils mit einer Entlüftungsleitung verbunden ist.

Auch bei dieser Ausführungsform der ersten Magnetventileinheit können die Tragbälge der Schleppachse wahlweise durch eine pneumatische Verbindung mit den Tragbälgen der Hauptachse belüftet oder durch eine pneumatische Verbindung mit der Entlüftungsleitung entlüftet werden. Alternativ dazu kann der Balgdruck in den Tragbälgen der Schleppachse durch eine pneumatische Absperrung gegenüber den Tragbälgen der Hauptachse und gegenüber der Entlüftungsleitung konstant gehalten werden.

Um die vorgesehene Absenkung der Schleppachse bei abgeschalteter Stromversorgung zu erreichen, kann das Einlassventil derart ausgebildet sein, dass sein Arbeitsausgang in einem unbestromten Zustand mit seinem Druckeingang verbunden sowie in einem bestromten Zustand gegenüber diesem Druckeingang abgesperrt ist. Zudem ist das Auslassventil derart ausgebildet, dass sein Arbeitseingang in einem unbestromten Zustand gegenüber seinem Entlüftungsausgang abgesperrt sowie in einem bestromten Zustand mit diesem Entlüftungsausgang verbunden ist.

Die zweite Magnetventileinheit kann als ein 3/2-Wege-Magnetschaltventil mit einem Druckeingang, einem Arbeitsausgang und einem Entlüftungsausgang ausgebildet sein, wobei der Druckeingang dieses 3/2-Wege-Magnetschaltventils mit einer Vorratsleitung verbunden ist, der Arbeitsausgang mit dem Liftbalg der Schleppachse verbunden ist und der Entlüftungsausgang mit der Entlüftungsleitung in Verbindung steht.

Der Liftbalg der Schleppachse kann somit wahlweise durch eine Verbindung mit der Vorratsleitung belüftet oder durch eine Verbindung mit der Entlüftungsleitung entlüftet werden, wobei die Schleppachse durch eine Belüftung des Liftbalgs in Verbindung mit einer Entlüftung der Tragbälge angehoben sowie durch eine Entlüftung des Liftbalgs in Verbindung mit einer Belüftung der Tragbälge abgesenkt wird.

Um die vorgesehene Absenkung der Schleppachse bei abgeschalteter Stromversorgung zu erreichen, kann das 3/2-Wege-Magnetschaltventil derart ausgebildet sein, dass dessen Arbeitsausgang in einem unbestromten Zustand mit seinem Entlüftungsausgang verbunden sowie gegenüber seinem Druckeingang abgesperrt ist und dass dessen Arbeitsausgang in einem bestromten Zustand mit seinem Druckeingang verbunden sowie gegenüber dem Entlüftungsausgang abgesperrt ist.

Zur Steuerung einer erfindungsgemäßen elektromagnetischen Ventilanordnung, welche eine erste Magnetventileinheit mit einem 3/3-Wege-Magnetschaltventil und eine zweite Magnetventileinheit mit einem 3/2-Wege-Magnetschaltventil aufweist, sind für einen Liftachsbetrieb eines Anhängefahrzeugs mit angehobener Schleppachse die folgenden Verfahrensschritte vorgesehen:
A) Überprüfen, ob ein auf der Hauptachse und/oder einer Zusatzachse des Anhängefahrzeugs lastendes Gewicht bei vollständig angehobener Schleppachse größer wäre als ein vordefinierter Gewichtsgrenzwert.
B) Bei negativer Feststellung im Verfahrensschritt A, also wenn das auf der Hauptachse und/oder der Zusatzachse lastende Gewicht bei vollständig angehobener Schleppachse nicht größer wäre als der vordefinierte Gewichtsgrenzwert: Schalten des 3/3-Wege-Magnetschaltventils der ersten Magnetventileinheit in seine Entlüftungsstellung. Dadurch werden die Tragbälge der Hauptachse und die Tragbälge der Zusatzachse des Anhängefahrzeugs abgesperrt sowie die Tragbälge der Schleppachse entlüftet.
C) Schalten des 3/2-Wege-Magnetschaltventils der zweiten Magnetventileinheit in seine Belüftungsstellung, wodurch der Liftbalg der Schleppachse belüftet und die Schleppachse zumindest soweit angehoben wird, bis deren Räder den Kontakt zur Fahrbahn verloren haben.

Zur Steuerung dieser elektromagnetischen Ventilanordnung zur Ausführung eines Schleppachsbetriebes eines Anhängefahrzeugs mit abgesenkter Schleppachse sind die folgenden Verfahrensschritte vorgesehen:
D) Überprüfen, ob ein auf der Hauptachse und/oder einer Zusatzachse des Anhängefahrzeugs lastendes Gewicht bei vollständig angehobener Schleppachse größer wäre als ein vordefinierter Grenzwert.
E) Bei positiver Beurteilung im Verfahrensschritt D, also wenn das auf der Hauptachse und/oder der Zusatzachse lastende Gewicht bei vollständig angehobener Schleppachse größer wäre als der vordefinierte Grenzwert: Schalten des 3/2-Wege-Magnetschaltventils der zweiten Magnetventileinheit in seine Entlüftungsstellung, wodurch der Liftbalg der Schleppachse entlüftet wird und dadurch die Räder an der Schleppachse den Kontakt zur Fahrbahn behalten oder erhalten.
F) Einstellen eines beliebigen Druckes zwischen dem Umgebungsdruck und einem maximalen Druck in den Tragbälgen der Hauptachse, der Zusatzachse und der Schleppachse des Anhängefahrzeugs durch Öffnen oder Schließen des 3/3-Wege-Magnetschaltventils der ersten Magnetventileinheit.

Zur Steuerung einer erfindungsgemäßen elektromagnetischen Ventilanordnung, welche eine erste Magnetventileinheit mit einem als 2/2-Wege-Magnetschaltventil ausgebildeten Einlassventil sowie mit einem als 2/2-Wege-Magnetschaltventil ausgebildetes Auslassventil und ein 3/2-Wege-Magnetschaltventil einer zweiten Magnetventileinheit aufweist, sind für einen Liftachsbetrieb eines Anhängefahrzeugs mit angehobener Schleppachse die folgenden Verfahrensschritte vorgesehen:
G) Überprüfen, ob ein auf der Hauptachse und/oder einer Zusatzachse des Anhängefahrzeugs lastendes Gewicht bei vollständig angehobener Schleppachse größer wäre als ein vordefinierter Gewichtsgrenzwert.
H) Bei negativer Feststellung im Verfahrensschritt G, das auf der Hauptachse und/oder der Zusatzachse lastende Gewicht bei vollständig angehobener Schleppachse größer wäre als der vordefinierte Gewichtsgrenzwert: Schalten des Einlassventils in seine Absperrstellung und Schalten des Auslassventils in seine Öffnungsstellung. Dadurch werden die Tragbälge der Hauptachse und die Tragbälge der Zusatzachse des Anhängefahrzeugs abgesperrt sowie die Tragbälge der Schleppachse entlüftet.
I) Schalten des 3/2-Wege-Magnetschaltventils der zweiten Magnetventileinheit in seine Belüftungsstellung, wodurch der Liftbalg der Schleppachse belüftet und die Schleppachse zumindest soweit angehoben wird, bis deren Räder den Kontakt zur Fahrbahn verloren haben.

Zur Steuerung der gerade genannten Ventilanordnung zur Ausführung eines Schleppachsbetriebes eines Anhängefahrzeuges mit abgesenkter Schleppachse sind die folgenden Verfahrensschritte vorgesehen:
J) Überprüfen, ob ein auf einer Hauptachse und/oder einer Zusatzachse des Anhängefahrzeugs lastendes Gewicht bei vollständig angehobener Schleppachse größer wäre als ein vordefinierter Grenzwert.
K) Bei positiver Beurteilung im Verfahrensschritt J, also wenn das auf der Hauptachse und/oder der Zusatzachse lastende Gewicht bei vollständig angehobener Schleppachse größer wäre als der vordefinierte Grenzwert: Schalten des 3/2-Wege-Magnetschaltventils der zweiten Magnetventileinheit in seine Entlüftungsstellung. Dadurch wird der Liftbalg der Schleppachse entlüftet und die Räder an der Schleppachse behalten oder erhalten Kontakt zur Fahrbahn.
L) Einstellen eines beliebigen Druckes zwischen dem Umgebungsdruck und einem maximalen Druck in den Tragbälgen der Hauptachse, der Zusatzachse und der Schleppachse des Anhängefahrzeugs durch Öffnen oder Schließen des Auslassventils.

Der Druck in den Tragbälgen der Hauptachse, der Zusatzachse und der Schleppachse wird vorzugsweise in Abhängigkeit von dem auf der Hauptachse und/oder der Zusatzachse lastenden Gewicht und/oder einer Verteilung einer Beladung oder eines Beladungsgewichts des Anhängefahrzeugs und/oder einer Geometrie des Anhängefahrzeugs eingestellt.

Es kann vorgesehen sein, dass der Druck in den Tragbälgen der Schleppachse maximal so hoch ist wie der Druck in den Tragbälgen der Hauptachse und der Zusatzachse.

Schließlich kann zur Ausführung eines Liftachsbetriebes eines Anhängefahrzeuges mit angehobener Schleppachse eine Steuerung der elektromagnetischen Ventilanordnung vorgesehen sein, welche die folgenden Verfahrensschritte aufweist:
M) In mehreren Entlüftungsschritten schrittweises Entlüften der Tragbälge der Hauptachse, der Schleppachse und, falls vorhanden, einer Zusatzachse.
N) Nach jedem Entlüftungsschritt Überprüfen, ob ein auf die jeweiligen Tragbälge wirkendes Gewicht einen vorbestimmten Gewichtsgrenzwert überschreitet.
O) Bei negativer Beurteilung im Verfahrensschritt N, wenn also das auf die jeweiligen Tragbälge wirkende Gewicht den vorbestimmten Gewichtsgrenzwert nicht überschreitet: erneutes teilweises Entlüften der Tragbälge in einem weiteren Entlüftungsschritt.
P) Nach einem letzten Entlüftungsschritt bei fast vollständig entleerten Tragbälgen der Schleppachse sowie bei weiterhin negativer Beurteilung im Verfahrensschritt N, also wenn weiterhin das auf die jeweiligen Tragbälge wirkende Gewicht den vorbestimmten Gewichtsgrenzwert nicht überschreitet: Belüften des zumindest einen Liftbalgs der Schleppachse, wodurch diese soweit angehoben wird, dass deren Räder von der Fahrbahn abheben.

Bei diesem Verfahren wird schrittweise ermittelt, ob die Hauptachse und eine gegebenenfalls vorhandene Zusatzachse am Anhängefahrzeug ohne Überschreitung einer zulässigen Belastungsgrenze in der Lage sind, die auf diese einwirkende Achslast zu tragen. Dies wird durch eine schrittweise Entlastung der Schleppachse erreicht. Sobald festgestellt ist, dass die Hauptachse alleine oder im Zusammenwirken mit einer gegebenenfalls vorhandenen Zusatzachse in der Lage ist, die auf diese Achsen einwirkende Last zu tragen, wird der wenigstens eine Liftbalg der Schleppachse belüftet und diese soweit angehoben, dass die Schleppachse keine Last mehr tragen muss.

Nachfolgend wird die Ventilanordnung mit den Merkmalen der Erfindung anhand von in der beigefügten Zeichnung dargestellten Ausführungsbeispielen näher erläutert. In dieser Zeichnung zeigt
- Fig. 1: ein Fahrzeuggespann bestehend aus einem Zugfahrzeug und einem Anhängefahrzeug mit einer ersten Ausführungsform einer erfindungsgemäßen Ventilanordnung in einer Seitenansicht,
- Fig. 1a: die Ventilanordnung gemäß Fig. 1 mit einem 3/3-Wege-Magnetschaltventil gemäß der ersten Ausführungsform in einer vergrößerten Teilansicht,
- Fig. 1b: einen Ausschnitt aus der Ventilanordnung gemäß den Fig. 1 und 1a mit einem 3/3-Wege-Magnetschaltventil gemäß einer zweiten Ausführungsform,
- Fig. 2: das Fahrzeuggespann gemäß Fig. 1 mit einer zweiten Ausführungsform einer erfindungsgemäßen Ventilanordnung in einer Seitenansicht, und
- Fig. 2a: die Ventilanordnung gemäß Fig. 2 in einer vergrößerten Teilansicht.

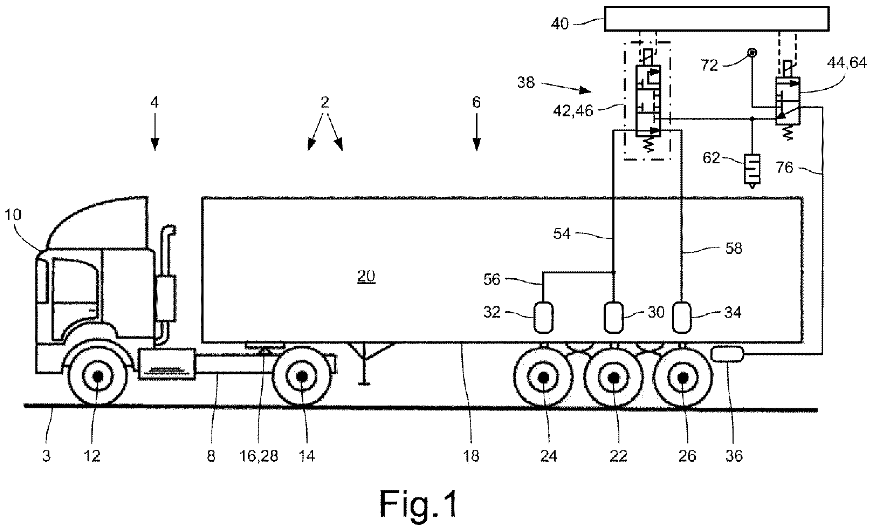

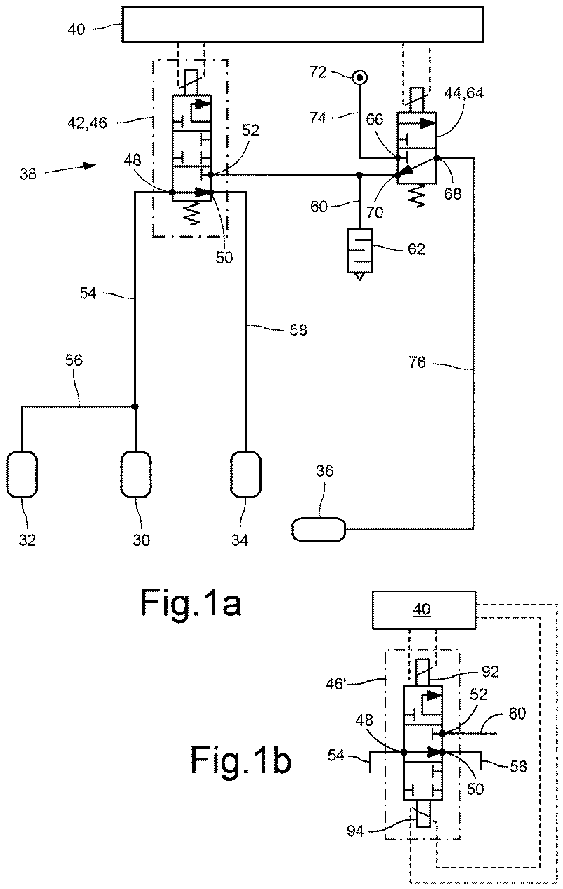

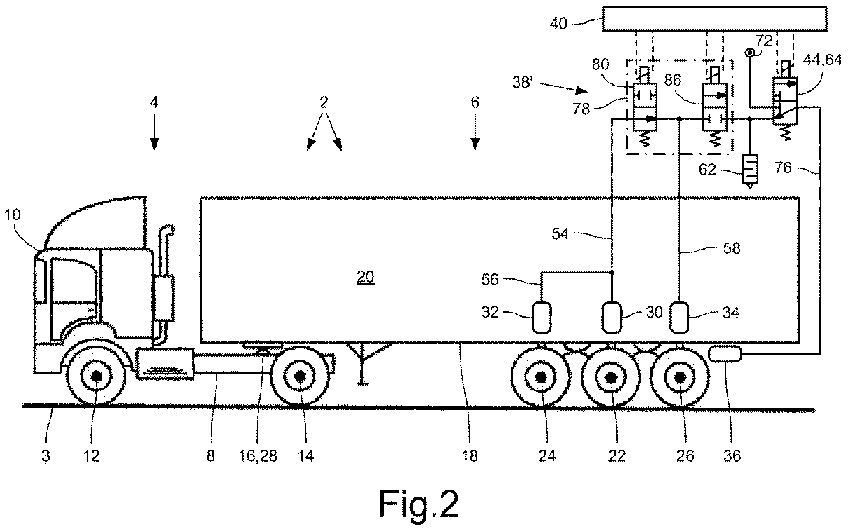

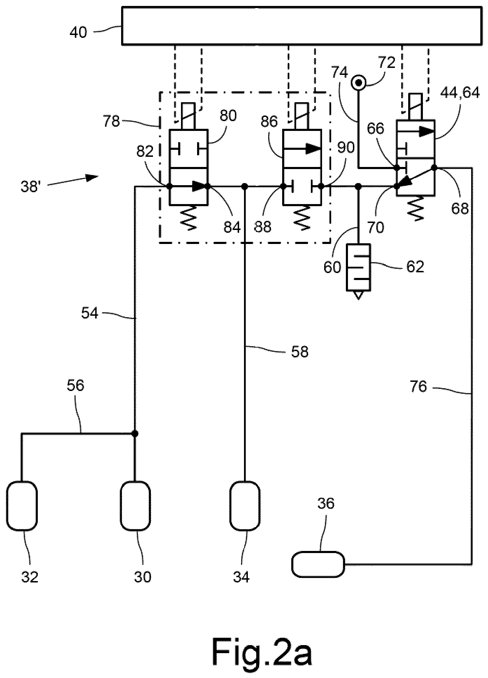

In den Fig. 1 und 2 ist ein als ein Sattelzug ausgebildetes Fahrzeuggespann 2 abgebildet, welches aus einer Sattelzugmaschine als Zugfahrzeug 4 und einem an diese angekoppelten Sattelauflieger als Anhängefahrzeug 6 besteht. Das Fahrzeuggespann 2 steht auf einer Fahrbahn 3. Das Zugfahrzeug 4 weist einen Fahrzeugrahmen 8 auf, auf dem ein Fahrerhaus 10 angeordnet ist. Der Fahrzeugrahmen 8 wird von einer lenkbaren Vorderachse 12 und einer als Antriebsachse ausgebildeten Hinterachse 14 getragen. Die beiden Fahrzeugachsen 12, 14 des Zugfahrzeugs 4 können wechselweise oder gleichermaßen über Stahlfedern oder Luftfedern an dem Fahrzeugrahmen 8 abgestützt sein. Im Heckbereich des Zugfahrzeugs 4 ist ein als Sattelkupplung ausgebildetes Koppelelement 16 an dem Fahrzeugrahmen 8 befestigt.

Das Anhängefahrzeug 6 weist einen Fahrzeugrahmen 18 auf, auf dem ein kastenförmiger Kofferaufbau 20 montiert ist. Der Fahrzeugrahmen 18 wird von drei benachbart hintereinander angeordneten Achsen 22, 24, 26 getragen. Im Frontbereich des Anhängefahrzeuges 6 ist ein Gegenkoppelelement 28 in Form einer mit einem Königszapfen versehenen Sattelplatte an dem Fahrzeugrahmen 18 befestigt, über welches das Anhängefahrzeug 6 mittels der Sattelkupplung 16 an das Zugfahrzeug 4 schwenkbar angekoppelt ist.

Die mittlere Achse des Anhängefahrzeugs 6 bildet dessen Hauptachse 22. Sie ist luftgefedert mit dem Fahrzeugrahmen 18 verbunden. Hierzu sind zwei Luftfedern mit deren Tragbälgen angeordnet, von denen in den Fig. 1 und 2 jeweils nur ein Tragbalg 30 erkennbar ist. Die in Vorwärtsfahrtrichtung gesehen vordere Achse ist als eine Zusatzachse 24 ausgebildet, welche über zwei Luftfedern mittels deren Tragbälgen 32 an dem Fahrzeugrahmen 18 abgestützt ist. Die in Vorwärtsfahrtrichtung gesehen hintere Achse ist als eine anhebbare Schleppachse 26 ausgebildet, welche ebenfalls mittels zwei Luftfedern über deren Tragbälgen 34 an dem Fahrzeugrahmen 18 abgestützt sowie mittels wenigstens einem Liftbalg 36 anhebbar und absenkbar angeordnet ist.

In der Fig. 1 ist zusätzlich zu dem Fahrzeuggespann 2 eine erste Ausführungsform einer erfindungsgemäßen Ventilanordnung 38 schematisch dargestellt, welche tatsächlich am Fahrzeugrahmen 18 befestigt und in Fig. 1a zudem vergrößert abgebildet ist. Die Ventilanordnung 38 umfasst eine von einem elektronischen Steuergerät 40 ansteuerbare erste Magnetventileinheit 42 zur stufenlosen Einstellung des Balgdruckes in den Tragbälgen 34 der Schleppachse 26 zwischen einem Umgebungsdruck und dem in den Tragbälgen 30, 32 der Hauptachse 22 sowie der Zusatzachse 24 anliegenden Balgdruck. Zudem ist eine von dem elektronischen Steuergerät 40 unabhängig von der ersten Magnetventileinheit 42 ansteuerbare zweite Magnetventileinheit 44 vorhanden, welche zur Umschaltung des Balgdruckes im Liftbalg 36 der Schleppachse 26 zwischen dem Umgebungsdruck und einem Vorratsdruck dient.

Die erste Magnetventileinheit 42 gemäß den Figuren 1 und 1a ist als ein 3/3-Wege-Magnetschaltventil 46 mit einem Druckeingang 48, einem Arbeitsausgang 50 und einem Entlüftungsausgang 52 ausgebildet. Die erste Magnetventileinheit 42 ist über eine nicht bezeichnete elektrische Steuerleitung an das Steuergerät 40 angeschlossen.

Der Druckeingang 48 ist über eine erste Anschlussleitung 54 und eine Verbindungsleitung 56 mit den Tragbälgen 30, 32 der Hauptachse 22 und der Zusatzachse 24 verbunden. Der Arbeitsausgang 50 ist über eine zweite Anschlussleitung 58 mit den Tragbälgen 34 der Schleppachse 26 verbunden. Der Entlüftungsausgang 52 ist mit einer Entlüftungsleitung 60 verbunden, welche über einen Schalldämpfer 62 in die Umgebung führt. Dieses 3/3-Wege-Magnetschaltventil 46 ist derart ausgebildet, dass der Arbeitsausgang 50 im unbestromten Zustand mit dem Druckeingang 48 verbunden sowie gegenüber dem Entlüftungsausgang 52 abgesperrt ist, im schwach bestromten Zustand gegenüber dem Druckeingang 48 und dem Entlüftungsausgang 52 abgesperrt ist, sowie im maximal bestromten Zustand mit dem Entlüftungsausgang 52 verbunden und gegenüber dem Druckeingang 48 abgesperrt ist.

Wie die Fig. 1b zeigt, kann das 3/3-Wege-Magnetschaltventil 46' auch so ausgebildet sein, dass dieses zwei von dem Steuergerät 40 ansteuerbare Elektromagneten 92, 94 aufweist. Diese Elektromagneten 92, 94 sind derart angeordnet, dass bei einer Bestromung des ersten Elektromagneten 92 das 3/3-Wege-Magnetschaltventil 46' in seine Entlüftungsstellung geschaltet ist, bei welcher der Druckeingang 48 abgesperrt und der Arbeitsausgang 50 mit dem Entlüftungsausgang 52 verbunden ist, dass bei einer Bestromung des zweiten Elektromagneten 94 das 3/3-Wege-Magnetschaltventil 46' in seine Absperrstellung geschaltet ist und dass bei nicht bestromten Elektromagneten 92, 94 der Druckeingang 48 sowie der Arbeitsausgang 50 des 3/3-Wege-Magnetschaltventils 46' miteinander verbunden sind, sowie der Entlüftungsausgang 52 geschlossen ist.

Auch bei einer solchen Ausführungsform des 3/3-Wege-Magnetschaltventils 46' ist sichergestellt, dass bei einem Stromausfall die Tragbälge 30, 32, 34 der Hauptachse 22, der Zusatzachse 24 und der Liftachse 26 pneumatisch miteinander verbunden sind.

Die zweite Magnetventileinheit 44 gemäß den Fig. 1 und 1a ist als ein 3/2-Wege-Magnetschaltventil 64 mit einem Druckeingang 66, einem Arbeitsausgang 68 und einem Entlüftungsausgang 70 ausgebildet, welches mittels einer elektrischen Steuerleitung an das Steuergerät 40 angeschlossen ist. Der Druckeingang 66 ist mit einer an eine Druckluftquelle 72 angeschlossene Vorratsleitung 74 verbunden. Der Arbeitsausgang 68 ist über eine Anschlussleitung 76 mit dem Liftbalg 36 der Schleppachse 26 verbunden. Der Entlüftungsausgang 70 steht mit der Entlüftungsleitung 60 pneumatisch in Verbindung. Dieses 3/2-Wege-Magnetschaltventil 64 ist derart ausgebildet, dass dessen Arbeitsausgang 68 im unbestromten Zustand mit dem Entlüftungsausgang 70 verbunden und gegenüber dem Druckeingang 66 abgesperrt ist, sowie im bestromten Zustand mit dem Druckeingang 66 verbunden und gegenüber dem Entlüftungsausgang 70 abgesperrt ist.

Somit kann der Balgdruck in den Tragbälgen 34 der Schleppachse 26 mittels der ersten Magnetventileinheit 42 stufenlos zwischen dem Umgebungsdruck und dem Balgdruck in den Tragbälgen 30, 32 der Hauptachse 22 und der Zusatzachse 24 eingestellt werden. Außerdem kann der Balgdruck in dem Liftbalg 36 der Schleppachse 26 mittels der zweiten Magnetventileinheit 44 unabhängig von der ersten Ventileinheit 42 wechselweise auf den Umgebungsdruck oder den in der Vorratsleitung 74 anliegenden Vorratsdruck eingestellt werden.

Zudem ist durch die Ausbildung der beiden Magnetventileinheiten 42, 44 sichergestellt, dass bei abgeschalteter Stromversorgung und somit unbestromten Magnetschaltventilen 46, 64 die Tragbälge 34 der Schleppachse 26 mit den Tragbälgen 30, 32 der Hauptachse 22 sowie der Zusatzachse 24 pneumatisch verbunden sind und der Liftbalg 36 der Schleppachse 26 mit der Entlüftungsleitung 60 verbunden ist, was bei einer angehobenen Schleppachse 26 zu deren Absenkung in Richtung zur Fahrbahn 3 führt.

Um mittels der elektromagnetischen Ventilanordnung 38 gemäß den Figuren 1 und 1a einen Liftachsbetrieb mit angehobener Schleppachse 26 einzustellen sind die folgenden Verfahrensschritte vorgesehen:
A) Überprüfen, ob ein auf der Hauptachse 22 und/oder einer Zusatzachse 24 des Anhängefahrzeugs 6 lastendes Gewicht bei vollständig angehobener Schleppachse 26 größer wäre als ein vordefinierter Gewichtsgrenzwert.
B) Bei negativer Feststellung im Verfahrensschritt A, wenn das auf der Hauptachse 22 und/oder der Zusatzachse 24 lastende Gewicht bei vollständig angehobener Schleppachse 26 nicht größer wäre als der vordefinierte Gewichtsgrenzwert: Schalten des 3/3-Wege-Magnetschaltventils 46 der ersten Ausführungsform der ersten Magnetventileinheit 42 in seine Entlüftungsstellung. Hierdurch werden die Tragbälge 30 der Hauptachse 22 und die Tragbälge 32 der Zusatzachse 24 des Anhängefahrzeugs 6 abgesperrt, sowie die Tragbälge 34 der Schleppachse 26 entlüftet.
C) Schalten des 3/2-Wege-Magnetschaltventils 64 der zweiten Magnetventileinheit 44 in seine Belüftungsstellung, wodurch der Liftbalg 36 der Schleppachse 26 belüftet und die Schleppachse 26 zumindest soweit angehoben wird, bis deren Räder den Kontakt zur Fahrbahn 3 verloren haben.

Wenn dagegen ein Schleppachsbetrieb mit abgesenkter Schleppachse 26 durchgeführt werden soll, sind die nachfolgenden Verfahrensschritte auszuführen:
D) Überprüfen, ob ein auf der Hauptachse 22 und/oder einer Zusatzachse 24 des Anhängefahrzeugs 6 lastendes Gewicht bei vollständig angehobener Schleppachse 26 größer wäre als ein vordefinierter Grenzwert.
E) Bei positiver Beurteilung im Verfahrensschritt D, also wenn das auf der Hauptachse 22 und/oder einer Zusatzachse 24 des Anhängefahrzeugs 6 lastende Gewicht bei vollständig angehobener Schleppachse 26 größer wäre als der vordefinierte Grenzwert: Schalten des 3/2-Wege-Magnetschaltventils 64 der zweiten Magnetventileinheit 44 in seine Entlüftungsstellung, wodurch der Liftbalg 36 der Schleppachse 26 entlüftet wird und dadurch die Räder an der Schleppachse 26 Kontakt zur Fahrbahn 3 behalten oder erhalten.
F) Einstellen eines beliebigen Druckes zwischen dem Umgebungsdruck und einem maximalen Druck in den Tragbälgen 30, 32, 34 der Hauptachse 22, der Zusatzachse 24 und der Schleppachse 26 des Anhängefahrzeugs 6 durch Öffnen oder Schließen des 3/3-Wege-Magnetschaltventils 46.

In der Fig. 2 ist an dem Fahrzeuggespann 2 eine zweite Ausführungsform einer erfindungsgemäßen Ventilanordnung 38' schematisch dargestellt, welche tatsächlich am Fahrzeugrahmen 18 des Anhängefahrzeugs 6 befestigt und in Fig. 2a vergrößert abgebildet ist. Diese Ventilanordnung 38' umfasst ebenfalls eine von dem elektronischen Steuergerät 40 ansteuerbare erste Magnetventileinheit 78 (zweite Ausführungsform) zur stufenlosen Einstellung des Balgdruckes in den Tragbälgen 34 der Schleppachse 26 zwischen einem Umgebungsdruck und dem in den Tragbälgen 30 der Hauptachse 22 sowie gegebenenfalls der Zusatzachse 24 anliegenden Balgdruck, sowie eine unabhängig von der ersten Magnetventileinheit 78 von dem elektronischen Steuergerät 40 ansteuerbare zweite Magnetventileinheit 44 zur Umschaltung des Balgdruckes in dem Liftbalg 36 der Schleppachse 26 zwischen dem Umgebungsdruck und einem Vorratsdruck. Bei gleicher Funktionsweise unterscheidet sich die Ventilanordnung 38' gemäß den Fig. 2 und 2a nur durch eine alternative Ausführung der ersten Magnetventileinheit 78 von der Ventilanordnung 38 gemäß den Fig. 1 und 1a.

Die erste Magnetventileinheit 78 gemäß den Fig. 2 und 2a umfasst nun ein als 2/2-Wege-Magnetschaltventil ausgebildetes Einlassventil 80 mit einem Druckeingang 82 und einem Arbeitsausgang 84 sowie ein als ein 2/2-Wege-Magnetschaltventil ausgebildetes Auslassventil 86 mit einem Arbeitseingang 88 und einem Entlüftungsausgang 90. Das Einlassventil 80 und das Auslassventil 86 sind über jeweils eine elektrische Steuerleitung an das Steuergerät 40 angeschlossen.

Der Druckeingang 82 ist über die Anschlussleitung 54 und die Verbindungsleitung 56 mit den Tragbälgen 30, 32 der Hauptachse 22 und der Zusatzachse 24 verbunden. Der Arbeitsausgang 84 des Einlassventils 80 und der Arbeitseingang 88 des Auslassventils 86 sind über die schon erwähnte Anschlussleitung 58 mit den Tragbälgen 34 der Schleppachse 26 verbunden. Der Entlüftungsausgang 90 des Auslassventils 86 ist mit der Entlüftungsleitung 60 verbunden, welche über den Schalldämpfer 62 in die Umgebung führt.

Das Einlassventil 80 ist derart ausgebildet, dass dessen Arbeitsausgang 84 im unbestromten Zustand mit dem Druckeingang 82 des Einlassventils 80 verbunden und im bestromten Zustand gegenüber dem Druckeingang 82 abgesperrt ist. Das Auslassventil 86 ist derart ausgebildet, dass dessen Arbeitseingang 88 im unbestromten Zustand gegenüber dem Entlüftungsausgang 90 abgesperrt und im bestromten Zustand mit dem Entlüftungsausgang 90 des Auslassventils 86 verbunden ist.

Auch bei dieser alternativen Ventilanordnung 38' kann der Balgdruck in den Tragbälgen 34 der Schleppachse 26 mittels der ersten Magnetventileinheit 78 stufenlos zwischen dem Umgebungsdruck und dem Balgdruck in den Tragbälgen 30, 32 der Hauptachse 22 sowie der Zusatzachse 24 eingestellt werden. Außerdem kann der Balgdruck in dem Liftbalg 36 der Schleppachse 26 mittels der zweiten Magnetventileinheit 44 unabhängig von der ersten Magnetventileinheit 78 wechselweise auf den Umgebungsdruck oder den in der Vorratsleitung 74 anliegenden Vorratsdruck eingestellt werden.

Zudem ist durch die Ausbildung der beiden beschriebenen Magnetventileinheiten 78, 44 gemäß Fig. 2 und 2a sichergestellt, dass bei abgeschalteter Stromversorgung und somit unbestromten Magnetschaltventilen 80, 86, 64 die Tragbälge 34 der Schleppachse 26 mit den Tragbälgen 30, 32 der Hauptachse 22 und der Zusatzachse 24 verbunden werden sowie der Liftbalg 36 der Schleppachse 26 mit der Entlüftungsleitung 60 verbunden wird, welches bei angehobener Schleppachse 26 zu deren Absenkung führt.

Der Vorteil dieser zweiten Ausführungsform der ersten Magnetventileinheit 78 gemäß den Fig. 2 und 2a besteht darin, dass deren Aufbau und Funktionsweise ähnlich denjenigen eines ABS-Regelventils sind. Daher kann diese Ausführung der ersten Magnetventileinheit 78 baugleich mit einem ABS-Regelventil einer druckluftbetriebenen Radbremse eines Nutzfahrzeugs ausgebildet sein, wodurch vorteilhaft Kosten für die Entwicklung, Herstellung und Lagerung einer neuen Magnetventileinheit eingespart werden können.

Um mittels der Ventilanordnung 38' gemäß den Fig. 2 und 2a einen Schleppachsbetrieb oder einen Liftachsbetrieb der Schleppachse 26 einzustellen, sind unterschiedliche Verfahrensschritte vorzusehen. So sind zur Ausführung eines Liftachsbetriebes mit angehobener Schleppachse 26 die folgenden Verfahrensschritte durchzuführen:
G) Überprüfen, ob ein auf der Hauptachse 22 und/oder einer Zusatzachse 24 des Anhängefahrzeugs 6 lastendes Gewicht bei vollständig angehobener Schleppachse 26 größer wäre als ein vordefinierter Gewichtsgrenzwert.
H) Bei negativer Feststellung im Verfahrensschritt G, wenn also das auf der Hauptachse 22 und/oder der Zusatzachse 24 lastende Gewicht bei vollständig angehobener Schleppachse 26 nicht größer wäre als der vordefinierte Gewichtsgrenzwert: Schalten des Einlassventils 80 in seine Absperrstellung und Schalten des Auslassventils 86 in seine Öffnungsstellung. Hierdurch werden die Tragbälge 30 der Hauptachse 22 und die Tragbälge 32 der Zusatzachse 24 des Anhängefahrzeugs 6 abgesperrt, sowie die Tragbälge 34 der Schleppachse 26 entlüftet.
I) Schalten des 3/2-Wege-Magnetschaltventils 64 der zweiten Magnetventileinheit 44 in seine Belüftungsstellung, wodurch der Liftbalg 36 der Schleppachse 26 belüftet und die Schleppachse 26 zumindest soweit angehoben wird, bis deren Räder den Kontakt zur Fahrbahn 3 verloren haben.

Im Unterschied dazu sind zur Steuerung der elektromagnetischen Ventilanordnung 38' zur Ausführung eines Schleppachsbetriebes mit abgesenkter Schleppachse 26 die folgenden Verfahrensschritte durchzuführen:
J) Überprüfen, ob ein auf der Hauptachse 22 und/oder einer Zusatzachse 24 des Anhängefahrzeugs 6 lastendes Gewicht bei vollständig angehobener Schleppachse 26 größer wäre als ein vordefinierter Grenzwert.
K) Bei positiver Beurteilung im Verfahrensschritt J, also wenn das auf der Hauptachse 22 und/oder der Zusatzachse 24 lastende Gewicht bei vollständig angehobener Schleppachse 26 größer wäre als der vordefinierte Grenzwert: Schalten des 3/2-Wege-Magnetschaltventils 64 der zweiten Magnetventileinheit 44 in seine Entlüftungsstellung, wodurch der Liftbalg 36 der Schleppachse 26 entlüftet wird und dadurch die Räder an der Schleppachse 26 Kontakt zur Fahrbahn 3 behalten oder erhalten.
L) Einstellen eines beliebigen Druckes zwischen dem Umgebungsdruck und einem maximalen Druck in den Tragbälgen 30, 32, 34 der Hauptachse 22, der Zusatzachse 24 und der Schleppachse 26 des Anhängefahrzeugs 6 durch Öffnen oder Schließen des Auslassventils 86.

Der Druck in den Tragbälgen 30, 32, 34 der Hauptachse 22, der Zusatzachse 24 und der Schleppachse 26 wird in Abhängigkeit von dem Gewicht des Anhängefahrzeugs 6 und/oder der Verteilung des Beladungsgewichts an dem Anhängefahrzeug 6 und/oder der Geometrie des Anhängefahrzeugs 6 eingestellt. Der Druck in den Tragbälgen 34 der Schleppachse 26 ist dabei maximal so hoch ist wie der Druck in den Tragbälgen 30, 32 der Hauptachse 22 und gegebenenfalls der Zusatzachse 24.

Gemäß einer anderen Verfahrensvariante sind zur Ausführung eines Liftachsbetriebes eines Anhängefahrzeuges 6 mit angehobener Schleppachse 26 die folgenden Verfahrensschritte vorgesehen:
M) In mehreren Entlüftungsschritten schrittweises Entlüften der Tragbälge 30, 32, 34 der Hauptachse 22, der Schleppachse 26 und falls vorhanden einer Zusatzachse 24.
N) Nach jedem Entlüftungsschritt: Überprüfen, ob ein auf die jeweiligen Tragbälge 30, 32, 34 wirkendes Gewicht einen vorbestimmten Gewichtsgrenzwert überschreitet.
O) Bei negativer Beurteilung im Verfahrensschritt N, also wenn das auf die jeweiligen Tragbälge 30, 32, 34 wirkende Gewicht den vorbestimmten Gewichtsgrenzwert nicht überschreitet: erneutes teilweises Entlüften der genannten Tragbälge 30, 32, 34 in einem weiteren Entlüftungsschritt.
P) Nach einem letzten Entlüftungsschritt bei fast vollständig entleerten Tragbälgen 34 der Schleppachse 26 sowie bei weiterhin negativer Beurteilung im Verfahrensschritt N, also wenn das auf die jeweiligen Tragbälge 30, 32, 34 wirkende Gewicht weiterhin den vorbestimmten Gewichtsgrenzwert nicht überschreitet: Belüften des zumindest einen Liftbalgs 36 der Schleppachse 26, wodurch die Schleppachse 26 soweit angehoben wird, dass deren Räder von der Fahrbahn 3 abheben.

Anschließend können die Tragbälge 30, 32 der Hauptachse 22 und wenn vorhanden der Zusatzachse 24 wieder belüftet werden.

Bei diesem Verfahren wird demnach schrittweise ermittelt, ob die Hauptachse 22 und eine gegebenenfalls vorhandene Zusatzachse 24 am Anhängefahrzeug 6 ohne Überschreitung einer zulässigen Belastungsgrenze in der Lage sind, die auf diese einwirkende Achslast zu tragen. Dies wird durch eine schrittweise Entlastung der Schleppachse 26 erreicht. Sobald festgestellt ist, dass die Hauptachse 22 alleine oder im Zusammenwirken mit der gegebenenfalls vorhandenen Zusatzachse 24 in der Lage ist, die auf diese Achsen 22, 24 einwirkende Last zu tragen, wird der wenigstens eine Liftbalg 34 der Schleppachse 26 belüftet und diese soweit angehoben, dass die Schleppachse 26 keine Last mehr tragen muss.

### Bezugszeichenliste (Teil der Beschreibung)

- 2: Fahrzeuggespann, Sattelzug
- 3: Fahrbahn
- 4: Zugfahrzeug, Sattelzugmaschine
- 6: Anhängefahrzeug, Sattelauflieger
- 8: Fahrzeugrahmen des Zugfahrzeugs
- 10: Fahrerhaus
- 12: Vorderachse des Zugfahrzeugs
- 14: Hinterachse, Antriebsachse des Zugfahrzeugs
- 16: Koppelelement, Sattelkupplung
- 18: Fahrzeugrahmen des Anhängefahrzeugs
- 20: Kofferaufbau des Anhängefahrzeugs
- 22: Hauptachse des Anhängefahrzeugs
- 24: Zusatzachse des Anhängefahrzeugs
- 26: Schleppachse des Anhängefahrzeugs
- 28: Gegenkoppelelement, Sattelplatte
- 30: Tragbalg an der Hauptachse des Anhängefahrzeugs
- 32: Tragbalg an der Zusatzachse des Anhängefahrzeugs
- 34: Tragbalg an der Schleppachse des Anhängefahrzeugs
- 36: Liftbalg an der Schleppachse
- 38: Ventilanordnung (erste Ausführungsform)
- 38': Ventilanordnung (zweite Ausführungsform)
- 40: Elektronisches Steuergerät
- 42: Erste Magnetventileinheit (erste Ausführungsform)
- 44: Zweite Magnetventileinheit
- 46: 3/3-Wege-Magnetschaltventil (erste Ausführungsform)
- 46': 3/3-Wege-Magnetschaltventil (zweite Ausführungsform)
- 48: Druckeingang am 3/3-Wege-Magnetschaltventil 46
- 50: Arbeitsausgang am 3/3-Wege-Magnetschaltventil 46
- 52: Entlüftungsausgang am 3/3-Wege-Magnetschaltventil 46
- 54: Erste Anschlussleitung
- 56: Verbindungsleitung
- 58: Zweite Anschlussleitung
- 60: Entlüftungsleitung
- 62: Schalldämpfer
- 64: 3/2-Wege-Magnetschaltventil
- 66: Druckeingang am 3/2-Wege-Magnetschaltventil 64
- 68: Arbeitsausgang am 3/2-Wege-Magnetschaltventil 64
- 70: Entlüftungsausgang am 3/2-Wege-Magnetschaltventil 64
- 72: Druckluftquelle
- 74: Vorratsleitung
- 76: Anschlussleitung
- 78: Erste Magnetventileinheit (zweite Ausführungsform)
- 80: Einlassventil, 2/2-Wege-Magnetschaltventil
- 82: Druckeingang am Einlassventil
- 84: Arbeitsausgang am Einlassventil
- 86: Auslassventil, 2/2-Wege-Magnetschaltventil
- 88: Arbeitseingang am Auslassventil
- 90: Entlüftungsausgang am Auslassventil
- 92: Erster Elektromagnet am 3/3-Wege-Magnetschaltventil 46'
- 94: Zweiter Elektromagnet am 3/3-Wege-Magnetschaltventil 46'

## Patentansprüche

1. Anhängefahrzeug (6) mit
- einer Hauptachse (22),
- einer Schleppachse (26), wobei die Schleppachse (26)
- in Vorwärtsfahrtrichtung gesehen vor oder hinter der Hauptachse (22) des Anhängefahrzeugs (6) angeordnet ist,
- über Tragbälge (34) an einem Fahrzeugrahmen (18) des Anhängefahrzeugs (6) abgestützt angeordnet ist und
- mittels mindestens eines Liftbalgs (36) anhebbar oder absenkbar ist,
wobei das Anhängefahrzeug **gekennzeichnet ist durch**
- eine elektromagnetische Ventilanordnung (38, 38') zur Steuerung der Schleppachse (26) und
- ein elektronisches Steuergerät (40),
wobei die Ventilanordnung (38, 38')
- von dem elektronischen Steuergerät (40) gesteuert wird und
- derart ausgebildet ist, dass
- ein Balgdruck in den Tragbälgen (34) sowie ein Balgdruck in dem Liftbalg (36) unabhängig voneinander einstellbar sind, und
- die Schleppachse (26) bei abgeschalteter Stromversorgung automatisch in Richtung auf eine Fahrbahn (3), auf der das Anhängefahrzeug (6) aufsteht, abgesenkt wird,
wobei
die Ventilanordnung (38, 38')
- eine von dem elektronischen Steuergerät (40) ansteuerbare erste Magnetventileinheit (42, 78) zur stufenlosen Einstellung des Balgdruckes in den Tragbälgen (34) der Schleppachse (26) zwischen einem Umgebungsdruck und einem in den Tragbälgen (30) der Hauptachse (22) anliegenden Balgdruck aufweist und
- eine unabhängig von der ersten Magnetventileinheit (42, 78) von dem elektronischen Steuergerät (40) ansteuerbare zweite Magnetventileinheit (44) zur Umschaltung des Balgdruckes in dem Liftbalg (36) der Schleppachse (26) zwischen dem Umgebungsdruck und einem Vorratsdruck aufweist,
wobei
die erste Magnetventileinheit (42) als ein 3/3-Wege-Magnetschaltventil (46, 46') mit einem Druckeingang (48), einem Arbeitsausgang (50) und einem Entlüftungsausgang (52) ausgebildet ist, wobei
- der Druckeingang (48) mit den Tragbälgen (30) der Hauptachse (22),
- der Arbeitsausgang (50) mit den Tragbälgen (34) der Schleppachse (26) und
- der Entlüftungsausgang (52) mit einer Entlüftungsleitung (60)
verbunden ist.

2. Anhängefahrzeug (6) nach Anspruch 1, **dadurch gekennzeichnet, dass** das 3/3-Wege-Magnetschaltventil (46) derart ausgebildet ist,
- dass der Arbeitsausgang (50) in einem unbestromten Zustand des 3/3-Wege-Magnetschaltventils (46) mit dem Druckeingang (48) verbunden und gegenüber dem Entlüftungsausgang (52) abgesperrt ist,
- dass der Arbeitsausgang (50) in einem schwach bestromten Zustand des 3/3-Wege-Magnetschaltventils (46) gegenüber dem Druckeingang (48) und dem Entlüftungsausgang (52) abgesperrt ist und
- dass der Arbeitsausgang (50) in einem maximal bestromten Zustand des 3/3-Wege-Magnetschaltventils (46) mit dem Entlüftungsausgang (52) verbunden sowie gegenüber dem Druckeingang (48) abgesperrt ist.

3. Anhängefahrzeug (6) nach Anspruch 1, **dadurch gekennzeichnet,**
- **dass** das 3/3-Wege-Magnetschaltventil (46') zwei von dem Steuergerät (40) ansteuerbare Elektromagneten (92, 94) aufweist, welche derart angeordnet sind, dass bei einer Bestromung des ersten Elektromagneten (92) das 3/3-Wege-Magnetschaltventil (46') in seine Entlüftungsstellung geschaltet ist, bei welcher der Druckeingang (48) abgesperrt und der Arbeitsausgang (50) mit dem Entlüftungsausgang (52) verbunden ist,
- **dass** bei einer Bestromung des zweiten Elektromagneten (94) das 3/3-Wege-Magnetschaltventil (46') in seine Absperrstellung geschaltet ist, und
- **dass** bei nicht bestromten Elektromagneten (92, 94) der Druckeingang (48) sowie der Arbeitsausgang (50) des 3/3-Wege-Magnetschaltventils (46') miteinander verbunden sind sowie der Entlüftungsausgang (52) geschlossen ist.

4. Anhängefahrzeug (6) mit
- einer Hauptachse (22),
- einer Schleppachse (26), wobei die Schleppachse (26)
- in Vorwärtsfahrtrichtung gesehen vor oder hinter der Hauptachse (22) des Anhängefahrzeugs (6) angeordnet ist,
- über Tragbälge (34) an einem Fahrzeugrahmen (18) des Anhängefahrzeugs (6) abgestützt angeordnet ist und
- mittels mindestens eines Liftbalgs (36) anhebbar oder absenkbar ist,
wobei das Anhängefahrzeug **gekennzeichnet ist durch**
- eine elektromagnetische Ventilanordnung (38, 38') zur Steuerung der Schleppachse (26) und
- ein elektronisches Steuergerät (40),
wobei die Ventilanordnung (38, 38')
- von dem elektronischen Steuergerät (40) gesteuert wird und
- derart ausgebildet ist, dass
- ein Balgdruck in den Tragbälgen (34) sowie ein Balgdruck in dem Liftbalg (36) unabhängig voneinander einstellbar sind, und
- die Schleppachse (26) bei abgeschalteter Stromversorgung automatisch in Richtung auf eine Fahrbahn (3), auf der das Anhängefahrzeug (6) aufsteht, abgesenkt wird,
wobei
die Ventilanordnung (38, 38')
- eine von dem elektronischen Steuergerät (40) ansteuerbare erste Magnetventileinheit (42, 78) zur stufenlosen Einstellung des Balgdruckes in den Tragbälgen (34) der Schleppachse (26) zwischen einem Umgebungsdruck und einem in den Tragbälgen (30) der Hauptachse (22) anliegenden Balgdruck aufweist und
- eine unabhängig von der ersten Magnetventileinheit (42, 78) von dem elektroni-
schen Steuergerät (40) ansteuerbare zweite Magnetventileinheit (44) zur Umschaltung des Balgdruckes in dem Liftbalg (36) der Schleppachse (26) zwischen dem Umgebungsdruck und einem Vorratsdruck aufweist,
wobei
die erste Magnetventileinheit (78) ein als ein 2/2-Wege-Magnetschaltventil ausgebildetes Einlassventil (80) mit einem Druckeingang (82) und einem Arbeitsausgang (84) sowie ein als ein 2/2-Wege-Magnetschaltventil ausgebildetes Auslassventil (86) mit einem Arbeitseingang (88) und einem Entlüftungsausgang (90) umfasst,
- wobei der Druckeingang (82) des Einlassventils (80) mit den Tragbälgen (30) der Hauptachse (22) verbunden ist,
- wobei der Arbeitsausgang (84) des Einlassventils (80) und der Arbeitseingang (88) des Auslassventils (86) mit den Tragbälgen (34) der Schleppachse (26) verbunden sind und
- wobei der Entlüftungsausgang (90) des Auslassventils (86) mit einer Entlüftungsleitung (60) verbunden ist.

5. Anhängefahrzeug (6) nach Anspruch 4, **dadurch gekennzeichnet,**
- **dass** das Einlassventil (80) derart ausgebildet ist, dass sein Arbeitsausgang (84) in einem unbestromten Zustand des Einlassventils (80) mit seinem Druckeingang (82) verbunden sowie in einem bestromten Zustand des Einlassventils (80) gegenüber diesem Druckeingang (82) abgesperrt ist, und
- **dass** das Auslassventil (86) derart ausgebildet ist, dass sein Arbeitseingang (88) in einem unbestromten Zustand des Auslassventils (86) gegenüber seinem Entlüftungsausgang (90) abgesperrt sowie in einem bestromten Zustand des Auslassventils (86) mit dem Entlüftungsausgang (90) verbunden ist.

6. Anhängefahrzeug (6) nach einem der Ansprüche 1 bis 5, **dadurch gekennzeichnet, dass** die zweite Magnetventileinheit (44) als ein 3/2-Wege-Magnetschaltventil (64) mit einem Druckeingang (66), einem Arbeitsausgang (68) und einem Entlüftungsausgang (70) ausgebildet ist, wobei
- der Druckeingang (66) dieses 3/2-Wege-Magnetschaltventils (64) mit einer Vorratsleitung (74),
- der Arbeitsausgang (68) mit dem Liftbalg (36) der Schleppachse (26) und
- der Entlüftungsausgang (70) mit der Entlüftungsleitung (60) verbunden ist.

7. Anhängefahrzeug (6) nach Anspruch 6, **dadurch gekennzeichnet, dass** das 3/2-Wege-Magnetschaltventil (64) derart ausgebildet ist,
- dass der Arbeitsausgang (68) in einem unbestromten Zustand des 3/2-Wege-Magnetschaltventils (64) mit dem Entlüftungsausgang (70) verbunden sowie gegenüber dem Druckeingang (66) abgesperrt ist, und
- dass der Arbeitsausgang (68) in einem bestromten Zustand des 3/2-Wege-Magnetschaltventils (64) mit dem Druckeingang (66) verbunden sowie gegenüber dem Entlüftungsausgang (70) abgesperrt ist.

8. Verfahren zur Steuerung der elektromagnetischen Ventilanordnung (38) des Anhängefahrzeugs (6) nach einem der Ansprüche 1, 2, 3, 6 und 7 zur Ausführung eines Liftachsbetriebes des Anhängefahrzeuges (6) mit angehobener Schleppachse (26), **gekennzeichnet durch** die folgenden Verfahrensschritte:
A) Überprüfen, ob ein auf der Hauptachse (22) und/oder einer Zusatzachse (24) des Anhängefahrzeugs (6) lastendes Gewicht bei vollständig angehobener Schleppachse (26) größer wäre als ein vordefinierter Gewichtsgrenzwert;
B) wenn das auf der Hauptachse (22) und/oder der Zusatzachse (24) des Anhängefahrzeugs (6) lastende Gewicht bei vollständig angehobener Schleppachse (26) nicht größer wäre als der vordefinierte Gewichtsgrenzwert: Schalten des oder eines 3/3-Wege-Magnetschaltventils (46) der ersten Magnetventileinheit (42) in seine Entlüftungsstellung,
wodurch die Tragbälge (30) der Hauptachse (22) und die Tragbälge (32) der Zusatzachse (24) des Anhängefahrzeugs (6) abgesperrt sowie die Tragbälge (34) der Schleppachse (26) entlüftet werden;
C) Schalten des oder eines 3/2-Wege-Magnetschaltventils (64) der zweiten Magnetventileinheit (44) in seine Belüftungsstellung, wodurch der Liftbalg (36) der Schleppachse (26) belüftet und die Schleppachse (26) zumindest soweit angehoben wird, bis deren Räder den Kontakt zur Fahrbahn (3) verloren haben.

9. Verfahren zur Steuerung der elektromagnetischen Ventilanordnung (38) des Anhängefahrzeugs (6) nach einem der Ansprüche 1 bis 7 zur Ausführung eines Schleppachsbetriebes mit abgesenkter Schleppachse (26),
**gekennzeichnet durch** die folgenden Verfahrensschritte:
D) Überprüfen, ob ein auf der Hauptachse (22) und/oder einer Zusatzachse (24) des Anhängefahrzeugs (6) lastendes Gewicht bei vollständig angehobener Schleppachse (26) größer wäre als ein vordefinierter Grenzwert;
E) wenn das auf der Hauptachse (22) und/oder der Zusatzachse (24) des Anhängefahrzeugs (6) lastende Gewicht bei vollständig angehobener Schleppachse (26) größer wäre als der vordefinierte Grenzwert: Schalten des oder eines 3/2-Wege-Magnetschaltventils (64) der zweiten Magnetventileinheit (44) in seine Entlüftungsstellung, wodurch der Liftbalg (36) der Schleppachse (26) entlüftet wird und dadurch die Räder an der Schleppachse (26) Kontakt zur Fahrbahn (3) behalten oder erhalten;
F) Einstellen eines beliebigen Druckes zwischen dem Umgebungsdruck und einem maximalen Druck in den Tragbälgen (30, 32, 34) der Hauptachse (22), der Zusatzachse (24) und der Schleppachse (26) des Anhängefahrzeugs (6) durch Öffnen oder Schließen des oder eines 3/3-Wege-Magnetschaltventils (46) der ersten Magnetventileinheit (42).

10. Verfahren zur Steuerung der elektromagnetischen Ventilanordnung (38') des Anhängefahrzeugs (6) nach einem der Ansprüche 4 bis 5 zur Ausführung eines Liftachsbetriebes mit angehobener Schleppachse (26),
**gekennzeichnet durch** die folgenden Verfahrensschritte:
G) Überprüfen, ob ein auf der Hauptachse (22) und/oder einer Zusatzachse (24) des Anhängefahrzeugs (6) lastendes Gewicht bei vollständig angehobener Schleppachse (26) größer wäre als ein vordefinierter Gewichtsgrenzwert;
H) wenn das auf der Hauptachse (22) und/oder der Zusatzachse (24) des Anhängefahrzeugs (6) lastende Gewicht bei vollständig angehobener Schleppachse (26) nicht größer wäre als der vordefinierte Gewichtsgrenzwert: Schalten des Einlassventils (80) in seine Absperrstellung und Schalten des Auslassventils (86) in seine Öffnungsstellung,
wodurch die Tragbälge (30) der Hauptachse (22) und die Tragbälge (32) der Zusatzachse (24) des Anhängefahrzeugs (6) abgesperrt sowie die Tragbälge (34) der Schleppachse (26) entlüftet werden;
I) Schalten des oder eines 3/2-Wege-Magnetschaltventils (64) der zweiten Magnetventileinheit (44) in seine Belüftungsstellung, wodurch der Liftbalg (36) der Schleppachse (26) belüftet und die Schleppachse (26) zumindest soweit angehoben wird, bis deren Räder den Kontakt zur Fahrbahn (3) verloren haben.

11. Verfahren zur Steuerung der elektromagnetischen Ventilanordnung (38') des Anhängefahrzeugs (6) nach einem der Ansprüche 1 bis 7 zur Ausführung eines Schleppachsbetriebes mit abgesenkter Schleppachse (26),
**gekennzeichnet durch** die folgenden Verfahrensschritte:
J) Überprüfen, ob ein auf der Hauptachse (22) und/oder einer Zusatzachse (24) des Anhängefahrzeugs (6) lastendes Gewicht bei vollständig angehobener Schleppachse (26) größer wäre als ein vordefinierter Gewichtsgrenzwert;
K) wenn das auf der Hauptachse (22) und/oder der Zusatzachse (24) des Anhängefahrzeugs (6) lastende Gewicht bei vollständig angehobener Schleppachse (26) größer wäre als der vordefinierte Gewichtsgrenzwert: Schalten des oder eines 3/2-Wege-Magnetschaltventils (64) der zweiten Magnetventileinheit (44) in seine Entlüftungsstellung, wodurch der Liftbalg (36) der Schleppachse (26) entlüftet wird und dadurch die Räder an der Schleppachse (26) Kontakt zur Fahrbahn (3) behalten oder erhalten;
L) Einstellen eines beliebigen Druckes zwischen dem Umgebungsdruck und einem maximalen Druck in den Tragbälgen (30, 32, 34) der Hauptachse (22), der Zusatzachse (24) und der Schleppachse (26) des Anhängefahrzeugs (6) durch Öffnen oder Schließen des Auslassventils (86).

12. Verfahren nach einem der Ansprüche 8 bis 11, **dadurch gekennzeichnet, dass** der Druck in den Tragbälgen (30, 32, 34) der Hauptachse (22), der Zusatzachse (24) und der Schleppachse (26) in Abhängigkeit von dem auf der Hauptachse und/oder der Zusatzachse lastenden Gewicht und/oder einer Verteilung eines Beladungsgewichts des Anhängefahrzeugs (6) und/oder einer Geometrie des Anhängefahrzeuges (6) eingestellt wird.

13. Verfahren nach einem der Ansprüche 8 bis 12, **dadurch gekennzeichnet, dass** der Druck in den Tragbälgen (34) der Schleppachse (26) maximal so hoch ist wie der Druck in den Tragbälgen (30, 32) der Hauptachse (22) und der Zusatzachse (24).

14. Verfahren zur Steuerung der elektromagnetischen Ventilanordnung (38, 38') des Anhängefahrzeugs (6) nach einem der Ansprüche 1 bis 7 zur Ausführung eines Liftachsbetriebes des Anhängefahrzeuges (6) mit einer Hauptachse (22), einer anhebbaren Schleppachse (26) und, falls vorhanden, einer Zusatzachse (24),
**gekennzeichnet durch** die folgenden Verfahrensschritte:
M) In mehreren Entlüftungsschritten schrittweises Entlüften der Tragbälge (30, 32, 34) der Hauptachse (22), der Schleppachse (26) und, falls vorhanden, einer Zusatzachse (24);
N) nach jedem Entlüftungsschritt: Überprüfen, ob ein auf die jeweiligen Tragbälge (30, 32, 34) wirkendes Gewicht einen vorbestimmten Gewichtsgrenzwert überschreitet;
O) wenn das auf die jeweiligen Tragbälge (30, 32, 34) wirkende Gewicht den vorbestimmten Gewichtsgrenzwert nicht überschreitet: erneutes teilweises Entlüften der Tragbälge (30, 32, 34) in einem weiteren Entlüftungsschritt;
P) nach einem letzten Entlüftungsschritt bei fast vollständig entleerten Tragbälgen (34) der Schleppachse (26) sowie wenn weiterhin das auf die jeweiligen Tragbälge (30, 32, 34) wirkende Gewicht den vorbestimmten Gewichtsgrenzwert nicht überschreitet:
Belüften des zumindest einen Liftbalgs (36) der Schleppachse (26),
wodurch diese soweit angehoben wird, dass deren Räder von der Fahrbahn (3) abheben.

## Claims

1. Trailer vehicle (6), comprising
- a main axle (22),
- a trailing axle (26), wherein the trailing axle (26)
- is arranged in front of or behind the main axle (22) of the trailer vehicle (6) considered in the forward travel direction,
- is arranged in a manner supported on a vehicle frame (18) of the trailer vehicle (6) via supporting bellows (34), and
- is raisable or lowerable by means of at least one lift bellows (36),
wherein the trailer vehicle is **characterized by**
- an electromagnetic valve assembly (38, 38') for controlling the trailing axle (26), and
- an electronic control unit (40),
wherein the valve assembly (38, 38')
- is controlled by the electronic control unit (40) and
- is designed in such a way that
- a bellows pressure in the supporting bellows (34) and a bellows pressure in the lift bellows (36) are adjustable independently of one another, and
- when the power supply is switched off, the trailing axle (26) is automatically lowered toward a roadway (3) on which the trailer vehicle (6) is situated,
wherein
the valve assembly (38, 38')
- has a first solenoid valve unit (42, 78), actuatable by the electronic control unit (40), for steplessly adjusting the bellows pressure in the supporting bellows (34) of the trailing axle (26) between an ambient pressure and a bellows pressure present in the supporting bellows (30) of the main axle (22) and
- has a second solenoid valve unit (44), actuatable by the electronic control unit (40) independently of the first solenoid valve unit (42, 78), for switching the bellows pressure in the lift bellows (36) of the trailing axle (26) between the ambient pressure and a supply pressure,
wherein
the first solenoid valve unit (42) is designed as a 3/3-way solenoid switching valve (46, 46') with a pressure inlet (48), a working outlet (50), and a vent outlet (52), wherein
- the pressure inlet (48) is connected to the supporting bellows (30) of the main axle (22),
- the working outlet (50) is connected to the supporting bellows (34) of the trailing axle (26), and
- the vent outlet (52) is connected to a vent line (60).

2. Trailer vehicle (6) according to claim 1, **characterized in that** the 3/3-way solenoid switching valve (46) is designed in such a way
- that in a de-energized state of the 3/3-way solenoid switching valve (46), the working outlet (50) is connected to the pressure inlet (48) and is shut off from the vent outlet (52),
- that in a low-energized state of the 3/3-way solenoid switching valve (46), the working outlet (50) is shut off from the pressure inlet (48) and the vent outlet (52), and
- that in a maximally energized state of the 3/3-way solenoid switching valve (46), the working outlet (50) is connected to the vent outlet (52) and is shut off from the pressure inlet (48).

3. Trailer vehicle (6) according to claim 1, **characterized**
- **in that** the 3/3-way solenoid switching valve (46') has two electromagnets (92, 94) actuatable by the control unit (40) and arranged in such a way that when the first electromagnet (92) is energized, the 3/3-way solenoid switching valve (46') is switched into its venting position, in which the pressure inlet (48) is shut off and the working outlet (50) is connected to the vent outlet (52),
- **in that** when the second electromagnet (94) is energized, the 3/3-way solenoid switching valve (46') is switched into its shut-off position, and
- **in that** when the electromagnets (92, 94) are not energized, the pressure inlet (48) and the working outlet (50) of the 3/3-way solenoid switching valve (46') are connected to one another and the vent outlet (52) is closed.

4. Trailer vehicle (6), comprising
- a main axle (22),
- a trailing axle (26), wherein the trailing axle (26)
- is arranged in front of or behind the main axle (22) of the trailer vehicle (6) considered in the forward travel direction,
- is arranged in a manner supported on a vehicle frame (18) of the trailer vehicle (6) via supporting bellows (34), and
- is raisable or lowerable by means of at least one lift bellows (36),
wherein the trailer vehicle **is characterized by**
- an electromagnetic valve assembly (38, 38') for controlling the trailing axle (26), and
- an electronic control unit (40),
wherein the valve assembly (38, 38')
- is controlled by the electronic control unit (40) and
- is designed in such a way that
- a bellows pressure in the supporting bellows (34) and a bellows pressure in the lift bellows (36) are adjustable independently of one another, and
- when the power supply is switched off, the trailing axle (26) is automatically lowered toward a roadway (3) on which the trailer vehicle (6) is situated,
wherein
the valve assembly (38, 38')
- has a first solenoid valve unit (42, 78), actuatable by the electronic control unit (40), for steplessly adjusting the bellows pressure in the supporting bellows (34) of the trailing axle (26) between an ambient pressure and a bellows pressure present in the supporting bellows (30) of the main axle (22) and
- has a second solenoid valve unit (44), actuatable by the electronic control unit (40) independently of the first solenoid valve unit (42, 78), for switching the bellows pressure in the lift bellows (36) of the trailing axle (26) between the ambient pressure and a supply pressure,
wherein
the first solenoid valve unit (78) comprises an inlet valve (80), designed as a 2/2-way solenoid switching valve, with a pressure inlet (82) and a working outlet (84) and comprises an outlet valve (86), designed as a 2/2-way solenoid switching valve, with a working inlet (88) and a vent outlet (90),
- wherein the pressure inlet (82) of the inlet valve (80) is connected to the supporting bellows (30) of the main axle (22),
- wherein the working outlet (84) of the inlet valve (80) and the working inlet (88) of the outlet valve (86) are connected to the supporting bellows (34) of the trailing axle (26), and
- wherein the vent outlet (90) of the outlet valve (86) is connected to a vent line (60).

5. Trailer vehicle (6) according to claim 4, **characterized**
- **in that** the inlet valve (80) is designed in such a way that its working outlet (84) is connected to its pressure inlet (82) in a de-energized state of the inlet valve (80) and is shut off from this pressure inlet (82) in an energized state of the inlet valve (80), and
- **in that** the outlet valve (86) is designed in such a way that its working inlet (88) is shut off from its vent outlet (90) in a de-energized state of the outlet valve (86) and is connected to the vent outlet (90) in an energized state of the outlet valve (86).

6. Trailer vehicle (6) according to any of claims 1 to 5, **characterized in that** the second solenoid valve unit (44) is designed as a 3/2-way solenoid switching valve (64) with a pressure inlet (66), a working outlet (68), and a vent outlet (70), wherein
- the pressure inlet (66) of this 3/2-way solenoid switching valve (64) is connected to a supply line (74),
- the working outlet (68) is connected to the lift bellows (36) of the trailing axle (26), and
- the vent outlet (70) is connected to the vent line (60).

7. Trailer vehicle (6) according to claim 6, **characterized in that** the 3/2-way solenoid switching valve (64) is designed in such a way
- that in a de-energized state of the 3/2-way solenoid switching valve (64), the working outlet (68) is connected to the vent outlet (70) and is shut off from the pressure inlet (66), and
- that in an energized state of the 3/2-way solenoid switching valve (64), the working outlet (68) is connected to the pressure inlet (66) and is shut off from the vent outlet (70).

8. Method for controlling the electromagnetic valve assembly (38) of the trailer vehicle (6) according to any of claims 1, 2, 3, 6 and 7 in order to carry out a lift axle operation of the trailer vehicle (6) with a raised trailing axle (26), **characterized by** the following method steps:
A) checking whether when the trailing axle (26) is fully raised, a weight bearing on the main axle (22) and/or an additional axle (24) of the trailer vehicle (6) would be greater than a predefined weight limit value;
B) if when the trailing axle (26) is fully raised, the weight bearing on the main axle (22) and/or the additional axle (24) of the trailer vehicle (6) would not be greater than the predefined weight limit value: switching the or a 3/3-way solenoid switching valve (46) of the first solenoid valve unit (42) into its venting position,
as a result of which the supporting bellows (30) of the main axle (22) and the supporting bellows (32) of the additional axle (24) of the trailer vehicle (6) are shut off and the supporting bellows (34) of the trailing axle (26) is vented;
C) switching the or a 3/2-way solenoid switching valve (64) of the second solenoid valve unit (44) into its ventilation position, as a result of which the lift bellows (36) of the trailing axle (26) is ventilated and the trailing axle (26) is raised at least until its wheels are no longer in contact with the roadway (3).

9. Method for controlling the electromagnetic valve assembly (38) of the trailer vehicle (6) according to any of claims 1 to 7 in order to carry out a trailing axle operation with a lowered trailing axle (26),
**characterized by** the following method steps:
D) checking whether when the trailing axle (26) is fully raised, a weight bearing on the main axle (22) and/or an additional axle (24) of the trailer vehicle (6) would be greater than a predefined limit value;
E) if when the trailing axle (26) is fully raised, the weight bearing on the main axle (22) and/or the additional axle (24) of the trailer vehicle (6) would be greater than the predefined limit value: switching the or a 3/2-way solenoid switching valve (64) of the second solenoid valve unit (44) into its venting position, as a result of which the lift bellows (36) of the trailing axle (26) is vented and thus the wheels on the trailing axle (26) come into or maintain contact with the roadway (3);
F) adjusting any pressure between the ambient pressure and a maximum pressure in the supporting bellows (30, 32, 34) of the main axle (22), the additional axle (24), and the trailing axle (26) of the trailer vehicle (6) by opening or closing the or a 3/3-way solenoid switching valve (46) of the first solenoid valve unit (42).

10. Method for controlling the electromagnetic valve assembly (38') of the trailer vehicle (6) according to either of claims 4 and 5 in order to carry out a lift axle operation with a raised trailing axle (26),
**characterized by** the following method steps:
G) checking whether when the trailing axle (26) is fully raised, a weight bearing on the main axle (22) and/or an additional axle (24) of the trailer vehicle (6) would be greater than a predefined weight limit value;
H) if when the trailing axle (26) is fully raised, the weight bearing on the main axle (22) and/or the additional axle (24) of the trailer vehicle (6) would not be greater than the predefined weight limit value: switching the inlet valve (80) into its shut-off position and switching the outlet valve (86) into its open position,
as a result of which the supporting bellows (30) of the main axle (22) and the supporting bellows (32) of the additional axle (24) of the trailer vehicle (6) are shut off and the supporting bellows (34) of the trailing axle (26) is vented;
I) switching the or a 3/2-way solenoid switching valve (64) of the second solenoid valve unit (44) into its ventilation position, as a result of which the lift bellows (36) of the trailing axle (26) is ventilated and the trailing axle (26) is raised at least until its wheels are no longer in contact with the roadway (3).

11. Method for controlling the electromagnetic valve assembly (38') of the trailer vehicle (6) according to any of claims 1 to 7 in order to carry out a trailing axle operation with a lowered trailing axle (26),
**characterized by** the following method steps:
J) checking whether when the trailing axle (26) is fully raised, a weight bearing on the main axle (22) and/or an additional axle (24) of the trailer vehicle (6) would be greater than a predefined weight limit value;
K) if when the trailing axle (26) is fully raised, the weight bearing on the main axle (22) and/or the additional axle (24) of the trailer vehicle (6) would be greater than the predefined weight limit value: switching the or a 3/2-way solenoid switching valve (64) of the second solenoid valve unit (44) into its venting position, as a result of which the lift bellows (36) of the trailing axle (26) is vented and thus the wheels on the trailing axle (26) come into or maintain contact with the roadway (3);
L) adjusting any pressure between the ambient pressure and a maximum pressure in the supporting bellows (30, 32, 34) of the main axle (22), the additional axle (24), and the trailing axle (26) of the trailer vehicle (6) by opening or closing the outlet valve (86).

12. Method according to any of claims 8 to 11, **characterized in that** the pressure in the supporting bellows (30, 32, 34) of the main axle (22), the additional axle (24), and the trailing axle (26) is adjusted on the basis of the weight bearing on the main axle and/or the additional axle, and/or on the basis of a distribution of a load weight of the trailer vehicle (6), and/or on the basis of a geometry of the trailer vehicle (6).

13. Method according to any of claims 8 to 12, **characterized in that** the pressure in the supporting bellows (34) of the trailing axle (26) is at most as high as the pressure in the supporting bellows (30, 32) of the main axle (22) and the additional axle (24).

14. Method for controlling the electromagnetic valve assembly (38, 38') of the trailer vehicle (6) according to any of claims 1 to 7 in order to carry out a lift axle operation of the trailer vehicle (6) with a main axle (22), a raisable trailing axle (26), and, if present, an additional axle (24),
**characterized by** the following method steps:
M) in a plurality of venting steps, venting the supporting bellows (30, 32, 34) of the main axle (22), the trailing axle (26), and, if present, an additional axle (24) step by step;
N) after each venting step: checking whether a weight acting on the respective supporting bellows (30, 32, 34) exceeds a predetermined weight limit value;
O) if the weight acting on the respective supporting bellows (30, 32, 34) does not exceed the predetermined weight limit value: partially venting the supporting bellows (30, 32, 34) again in a further venting step;
P) after a final venting step with the supporting bellows (34) of the trailing axle (26) almost completely emptied and if additionally the weight acting on the respective supporting bellows (30, 32, 34) does not exceed the predetermined weight limit value:
ventilating the at least one lift bellows (36) of the trailing axle (26),
as a result of which said axle is raised high enough that its wheels lift off the roadway (3).

## Revendications

1. Véhicule tracté (6) comportant
- un axe principal (22),
- un axe de remorquage (26), dans lequel l'axe de remorquage (26)
- est disposé, vu dans le sens de la marche avant, devant ou derrière l'axe principal (22) du véhicule tracté (6),
- est disposé en appui sur un châssis de véhicule (18) du véhicule tracté (6) par l'intermédiaire de soufflets porteurs (34), et
- peut être soulevé ou abaissé au moyen d'au moins un soufflet élévateur (36),
dans lequel le véhicule tracté est **caractérisé par**
- un agencement formant soupape (38, 38') électromagnétique pour la commande de l'axe de remorquage (26), et
- un appareil de commande électronique (40),
dans lequel l'agencement formant soupape (38, 38')
- est commandé par l'appareil de commande électronique (40), et
- est réalisé de telle sorte que
- une pression de soufflet dans les soufflets porteurs (34) ainsi qu'une pression de soufflet dans le soufflet élévateur (36) peuvent être réglées indépendamment l'une de l'autre, et
- l'axe de remorquage (26) est automatiquement abaissé, lorsque l'alimentation en courant est coupée, en direction d'une chaussée (3) sur laquelle le véhicule tracté (6) se trouve,
dans lequel
l'agencement formant soupape (38, 38')
- présente une première unité formant soupape électromagnétique (42, 78) pouvant être commandée par l'appareil de commande électronique (40) pour le réglage en continu de la pression de soufflet dans les soufflets porteurs (34) de l'axe de remorquage (26) entre une pression ambiante et une pression de soufflet appliquée dans les soufflets porteurs (30) de l'axe principal (22), et
- présente une seconde unité formant soupape électromagnétique (44) pouvant être commandée indépendamment de la première unité formant soupape électromagnétique (42, 78) par l'appareil de commande électronique (40) pour la commutation de la pression de soufflet dans le soufflet élévateur (36) de l'axe de remorquage (26) entre la pression ambiante et une pression de réserve,
dans lequel
la première unité formant soupape électromagnétique (42) est réalisée sous forme de soupape à commutation magnétique à 3/3 voies (46, 46') comportant une entrée de pression (48), une sortie de travail (50) et une sortie d'évacuation d'air (52), dans lequel
- l'entrée de pression (48) comportant les soufflets porteurs (30) de l'axe principal (22),
- la sortie de travail (50) comportant les soufflets porteurs (34) de l'axe de remorquage (26), et
- la sortie d'évacuation d'air (52) comportant une conduite d'évacuation d'air (60)
sont raccordées.

2. Véhicule tracté (6) selon la revendication 1, **caractérisé en ce que** la soupape à commutation magnétique à 3/3 voies (46) est réalisée de telle sorte
- que la sortie de travail (50) est raccordée à l'entrée de pression (48) dans un état non alimenté en électricité de la soupape à commutation magnétique à 3/3 voies (46) et est bloquée par rapport à la sortie d'évacuation d'air (52),
- que la sortie de travail (50) est bloquée par rapport à l'entrée de pression (48) et à la sortie d'évacuation d'air (52) dans un état faiblement alimenté en électricité de la soupape à commutation magnétique à 3/3 voies (46), et
- que la sortie de travail (50) est raccordée à la sortie d'évacuation d'air (52) dans un état alimenté en électricité de manière maximale de la soupape à commutation magnétique à 3/3 voies (46) et est bloquée par rapport à l'entrée de pression (48).

3. Véhicule tracté (6) selon la revendication 1, **caractérisé en ce**
- **que** la soupape à commutation magnétique à 3/3 voies (46') présente deux électroaimants (92, 94) pouvant être commandés par l'appareil de commande (40), lesquels sont disposés de telle sorte que, lors d'une alimentation électrique du premier électroaimant (92), la soupape à commutation magnétique à 3/3 voies (46') est commutée dans sa position d'évacuation d'air dans laquelle l'entrée de pression (48) est bloquée et la sortie de travail (50) est raccordée à la sortie d'évacuation d'air (52),
- **que**, lors d'une alimentation électrique du second électroaimant (94), la soupape à commutation magnétique à 3/3 voies (46') est commutée dans sa position de blocage, et
- **que,** lorsque les électroaimants (92, 94) ne sont pas alimentés en électricité, l'entrée de pression (48) ainsi que la sortie de travail (50) de la soupape à commutation magnétique à 3/3 voies (46') sont raccordées entre elles et la sortie d'évacuation d'air (52) est fermée.

4. Véhicule tracté (6) comportant
- un axe principal (22),
- un axe de remorquage (26), dans lequel l'axe de remorquage (26)
- est disposé, vu dans le sens de la marche avant, devant ou derrière l'axe principal (22) du véhicule tracté (6),
- est disposé en appui sur un châssis de véhicule (18) du véhicule tracté (6) par l'intermédiaire de soufflets porteurs (34), et
- peut être soulevé ou abaissé au moyen d'au moins un soufflet élévateur (36),
dans lequel le véhicule tracté est **caractérisé par**
- un agencement formant soupape (38, 38') électromagnétique pour la commande de l'axe de remorquage (26), et
- un appareil de commande électronique (40),
dans lequel l'agencement formant soupape (38, 38')
- est commandé par l'appareil de commande électronique (40), et
- est réalisé de telle sorte que
- une pression de soufflet dans les soufflets porteurs (34) ainsi qu'une pression de soufflet dans le soufflet élévateur (36) peuvent être réglées indépendamment l'une de l'autre, et
- l'axe de remorquage (26) est automatiquement abaissé, lorsque l'alimentation en courant est coupée, en direction d'une chaussée (3) sur laquelle le véhicule tracté (6) se trouve,
dans lequel
l'agencement formant soupape (38, 38')
- présente une première unité formant soupape électromagnétique (42, 78) pouvant être commandée par l'appareil de commande électronique (40) pour le réglage en continu de la pression de soufflet dans les soufflets porteurs (34) de l'axe de remorquage (26) entre une pression ambiante et une pression de soufflet appliquée dans les soufflets porteurs (30) de l'axe principal (22), et
- présente une seconde unité formant soupape électromagnétique (44) pouvant être commandée indépendamment de la première unité formant soupape électromagnétique (42, 78) par l'appareil de commande électronique (40) pour la commutation de la pression de soufflet dans le soufflet élévateur (36) de l'axe de remorquage (26) entre la pression ambiante et une pression de réserve,
dans lequel
la première unité formant soupape électromagnétique (78) comprend une soupape d'admission (80) réalisée sous forme de soupape à commutation magnétique à 2/2 voies comportant une entrée de pression (82) et une sortie de travail (84) ainsi qu'une soupape d'échappement (86) réalisée sous forme de soupape à commutation magnétique à 2/2 voies comportant une entrée de travail (88) et une sortie d'évacuation d'air (90),
- dans lequel l'entrée de pression (82) de la soupape d'admission (80) est raccordée aux soufflets porteurs (30) de l'axe principal (22),
- dans lequel la sortie de travail (84) de la soupape d'admission (80) et l'entrée de travail (88) de la soupape d'échappement (86) sont raccordées aux soufflets porteurs (34) de l'axe de remorquage (26), et
- dans lequel la sortie d'évacuation d'air (90) de la soupape d'échappement (86) est raccordée à une conduite d'évacuation d'air (60).

5. Véhicule tracté (6) selon la revendication 4, **caractérisé en ce**
- **que** la soupape d'admission (80) est réalisée de telle sorte que sa sortie de travail (84) est raccordée à son entrée de pression (82) dans un état non alimenté en électricité de la soupape d'admission (80) et est bloquée par rapport à ladite entrée de pression (82) dans un état alimenté en électricité de la soupape d'admission (80), et
- **que** la soupape d'échappement (86) est réalisée de telle sorte que son entrée de travail (88) est bloquée par rapport à sa sortie d'évacuation d'air (90) dans un état non alimenté en électricité de la soupape d'échappement (86) et est raccordée à la sortie d'évacuation d'air (90) dans un état alimenté en électricité de la soupape d'échappement (86).

6. Véhicule tracté (6) selon l'une des revendications 1 à 5,
**caractérisé en ce que** la seconde unité formant soupape électromagnétique (44) est réalisée sous forme de soupape à commutation magnétique à 3/2 voies (64) comportant une entrée de pression (66), une sortie de travail (68) et une sortie d'évacuation d'air (70), dans lequel
- l'entrée de pression (66) de ladite soupape à commutation magnétique à 3/2 voies (64) comportant une conduite de réserve (74),
- la sortie de travail (68) comportant le soufflet élévateur (36) de l'axe de remorquage (26), et
- la sortie d'évacuation d'air (70) comportant la conduite d'évacuation d'air (60) sont raccordées.

7. Véhicule tracté (6) selon la revendication 6, **caractérisé en ce que** la soupape à commutation magnétique à 3/2 voies (64) est réalisée de telle sorte
- que la sortie de travail (68) est raccordée à la sortie d'évacuation d'air (70) dans un état non alimenté en électricité de la soupape à commutation magnétique à 3/2 voies (64) et est bloquée par rapport à l'entrée de pression (66), et
- que la sortie de travail (68) est raccordée à l'entrée de pression (66) dans un état alimenté en électricité de la soupape à commutation magnétique à 3/2 voies (64) et est bloquée par rapport à la sortie d'évacuation d'air (70).

8. Procédé pour la commande de l'agencement formant soupape (38) électromagnétique du véhicule tracté (6) selon l'une des revendications 1, 2, 3, 6 et 7 pour la mise en œuvre d'un fonctionnement d'axe élévateur du véhicule tracté (6) avec l'axe de remorquage (26) soulevé, **caractérisé par** les étapes de procédé suivantes :
A) fait de vérifier si un poids pesant sur l'axe principal (22) et/ou sur un axe supplémentaire (24) du véhicule tracté (6) serait supérieur à une valeur limite de poids prédéfinie si l'axe de remorquage (26) était entièrement soulevé ;
B) si le poids pesant sur l'axe principal (22) et/ou sur l'axe supplémentaire (24) du véhicule tracté (6) ne serait pas supérieur à la valeur limite de poids prédéfinie si l'axe de remorquage (26) était complètement soulevé : commutation de la ou d'une soupape à commutation magnétique à 3/3 voies (46) de la première unité formant soupape électromagnétique (42) dans sa position d'évacuation d'air,
moyennant quoi les soufflets porteurs (30) de l'axe principal (22) et les soufflets porteurs (32) de l'axe supplémentaire (24) du véhicule tracté (6) sont bloqués et l'air des soufflets porteurs (34) de l'axe de remorquage (26) est évacué ;
C) commutation de la ou d'une soupape à commutation magnétique à 3/2 voies (64) de la seconde unité formant soupape électromagnétique (44) dans sa position de ventilation, moyennant quoi le soufflet élévateur (36) de l'axe de remorquage (26) est ventilé et l'axe de remorquage (26) est soulevé au moins jusqu'à ce que ses roues aient perdu le contact avec la chaussée (3).

9. Procédé pour la commande de l'agencement formant soupape (38) électromagnétique du véhicule tracté (6) selon l'une des revendications 1 à 7 pour la mise en œuvre d'un fonctionnement d'axe de remorquage avec l'axe de remorquage (26) abaissé,
**caractérisé par** les étapes de procédé suivantes :
D) fait de vérifier si un poids pesant sur l'axe principal (22) et/ou sur un axe supplémentaire (24) du véhicule tracté (6) serait supérieur à une valeur limite prédéfinie si l'axe de remorquage (26) était entièrement soulevé ;
E) si le poids pesant sur l'axe principal (22) et/ou sur l'axe supplémentaire (24) du véhicule tracté (6) serait supérieur à la valeur limite prédéfinie si l'axe de remorquage (26) était complètement soulevé : commutation de la ou d'une soupape à commutation magnétique à 3/2 voies (64) de la seconde unité formant soupape électromagnétique (44) dans sa position d'évacuation d'air, moyennant quoi l'air du soufflet élévateur (36) de l'axe de remorquage (26) est évacué et ainsi le contact des roues sur l'axe de remorquage (26) avec la chaussée (3) est maintenu ou obtenu ;
F) réglage d'une pression quelconque entre la pression ambiante et une pression maximale dans les soufflets porteurs (30, 32, 34) de l'axe principal (22), de l'axe supplémentaire (24) et de l'axe de remorquage (26) du véhicule tracté (6) en ouvrant ou en fermant la ou l'une soupape à commutation magnétique à 3/3 voies (46) de la première unité formant soupape électromagnétique (42).

10. Procédé pour la commande de l'agencement formant soupape (38') électromagnétique du véhicule tracté (6) selon l'une des revendications 4 à 5 pour la mise en œuvre d'un fonctionnement d'axe élévateur avec l'axe de remorquage (26) soulevé,
**caractérisé par** les étapes de procédé suivantes :
G) fait de vérifier si un poids pesant sur l'axe principal (22) et/ou sur un axe supplémentaire (24) du véhicule tracté (6) serait supérieur à une valeur limite de poids prédéfinie si l'axe de remorquage (26) était entièrement soulevé ;
H) si le poids pesant sur l'axe principal (22) et/ou sur l'axe supplémentaire (24) du véhicule tracté (6) ne serait pas supérieur à la valeur limite de poids prédéfinie si l'axe de remorquage (26) était complètement soulevé : commutation de la soupape d'admission (80) dans sa position d'arrêt et commutation de la soupape d'échappement (86) dans sa position d'ouverture,
moyennant quoi les soufflets porteurs (30) de l'axe principal (22) et les soufflets porteurs (32) de l'axe supplémentaire (24) du véhicule tracté (6) sont bloqués et l'air des soufflets porteurs (34) de l'axe de remorquage (26) est évacué ;
I) commutation de la ou d'une soupape à commutation magnétique à 3/2 voies (64) de la seconde unité formant soupape électromagnétique (44) dans sa position de ventilation, moyennant quoi le soufflet élévateur (36) de l'axe de remorquage (26) est ventilé et l'axe de remorquage (26) est soulevé au moins jusqu'à ce que ses roues aient perdu le contact avec la chaussée (3).

11. Procédé pour la commande de l'agencement formant soupape (38') électromagnétique du véhicule tracté (6) selon l'une des revendications 1 à 7 pour la mise en œuvre d'un fonctionnement d'axe de remorquage avec l'axe de remorquage (26) abaissé,
**caractérisé par** les étapes de procédé suivantes :
J) fait de vérifier si un poids pesant sur l'axe principal (22) et/ou sur un axe supplémentaire (24) du véhicule tracté (6) serait supérieur à une valeur limite de poids prédéfinie si l'axe de remorquage (26) était entièrement soulevé ;
K) si le poids pesant sur l'axe principal (22) et/ou sur l'axe supplémentaire (24) du véhicule tracté (6) serait supérieur à la valeur limite de poids prédéfinie si l'axe de remorquage (26) était complètement soulevé : commutation de la ou d'une soupape à commutation magnétique à 3/2 voies (64) de la seconde unité formant soupape électromagnétique (44) dans sa position d'évacuation d'air, moyennant quoi l'air du soufflet élévateur (36) de l'axe de remorquage (26) est évacué et ainsi le contact des roues sur l'axe de remorquage (26) avec la chaussée (3) est maintenu ou obtenu ;
L) réglage d'une pression quelconque entre la pression ambiante et une pression maximale dans les soufflets porteurs (30, 32, 34) de l'axe principal (22), de l'axe supplémentaire (24) et de l'axe de remorquage (26) du véhicule tracté (6) en ouvrant ou en fermant la soupape d'échappement (86).

12. Procédé selon l'une des revendications 8 à 11, **caractérisé en ce que** la pression dans les soufflets porteurs (30, 32, 34) de l'axe principal (22), de l'axe supplémentaire (24) et de l'axe de remorquage (26) est réglée en fonction du poids pesant sur l'axe principal et/ou sur l'axe supplémentaire et/ou d'une répartition d'un poids de chargement du véhicule tracté (6) et/ou d'une géométrie du véhicule tracté (6).

13. Procédé selon l'une des revendications 8 à 12, **caractérisé en ce que** la pression dans les soufflets porteurs (34) de l'axe de remorquage (26) est au maximum égale à la pression dans les soufflets porteurs (30, 32) de l'axe principal (22) et de l'axe supplémentaire (24).

14. Procédé pour la commande de l'agencement formant soupape (38, 38') électromagnétique du véhicule tracté (6) selon l'une des revendications 1 à 7 pour la mise en œuvre d'un fonctionnement d'axe élévateur du véhicule tracté (6) comportant un axe principal (22), un axe de remorquage (26) pouvant être soulevé et, le cas échéant, un axe supplémentaire (24),
**caractérisé par** les étapes de procédé suivantes :
M) en plusieurs étapes d'évacuation d'air, évacuation d'air progressive des soufflets porteurs (30, 32, 34) de l'axe principal (22), de l'axe de remorquage (26) et, le cas échéant, d'un axe supplémentaire (24) ;
N) après chaque étape d'évacuation d'air : fait de vérifier si un poids agissant sur les soufflets porteurs (30, 32, 34) respectifs dépasse par le haut une valeur limite de poids prédéterminée ;
O) si le poids agissant sur les soufflets porteurs (30, 32, 34) respectifs ne dépasse pas par le haut la valeur limite de poids prédéterminée : nouvelle évacuation d'air partielle des soufflets porteurs (30, 32, 34) lors d'une autre étape d'évacuation d'air ;
P) après une dernière étape d'évacuation d'air, lorsque les soufflets porteurs (34) de l'axe de remorquage (26) sont presque entièrement vidés, et lorsque, en outre, le poids agissant sur les soufflets porteurs (30, 32, 34) respectifs ne dépasse pas par le haut la valeur limite de poids prédéterminée :
ventilation de l'au moins un soufflet élévateur (36) de l'axe de remorquage (26),
moyennant quoi celui-ci est soulevé suffisamment pour que ses roues se soulèvent de la chaussée (3).
